(19)

**Europäisches Patentamt**
**European Patent Office**
**Office européen des brevets**

(11)  **EP 3 593 216 B1**

(12)  # EUROPEAN PATENT SPECIFICATION

(45)  Date of publication and mention
of the grant of the patent:
**04.06.2025  Bulletin 2025/23**

(51)  International Patent Classification (IPC):
**G05B 13/04** *(2006.01)*

(21)  Application number: **18763822.6**

(52)  Cooperative Patent Classification (CPC):
**G05B 13/045; G05B 13/048;** G05B 2219/42058;
G05B 2219/42155

(22)  Date of filing: **02.03.2018**

(86)  International application number:
**PCT/CA2018/000045**

(87)  International publication number:
**WO 2018/161147 (13.09.2018 Gazette 2018/37)**

(54)  **METHOD AND APPARATUS FOR DESIGNING MODEL-BASED CONTROL HAVING SPATIAL ROBUSTNESS FOR MULTIPLE-ARRAY CROSS- DIRECTION (CD) WEB MANUFACTURING OR PROCESSING SYSTEMS OR OTHER SYSTEMS**

VERFAHREN UND VORRICHTUNG ZUM ENTWURF VON MODELLBASIERTER STEUERUNG MIT RÄUMLICHER ROBUSTHEIT FÜR MULTIPLE-ARRAY-QUERRICHTUNGS-(CD)-BAHNHERSTELLUNGS- ODER -VERARBEITUNGSSYSTEME ODER ANDERE SYSTEME

PROCÉDÉ ET APPAREIL DE CONCEPTION D'UNE COMMANDE BASÉE SUR UN MODÈLE PRÉSENTANT UNE ROBUSTESSE SPATIALE POUR DES SYSTÈMES DE FABRICATION OU DE TRAITEMENT DE BANDE TRANSVERSALE À RÉSEAUX MULTIPLES (CD) OU D'AUTRES SYSTÈMES

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30)  Priority: **06.03.2017  US 201762467622 P**
**05.02.2018  US 201815889005**

(43)  Date of publication of application:
**15.01.2020  Bulletin 2020/03**

(73)  Proprietor: **Honeywell Limited**
**Mississauga, ON L5L 3S6 (CA)**

(72)  Inventors:
• **HE, Ning**
**Morris Plains, New Jersey 07950 (US)**
• **FORBES, Michael**
**Morris Plains, New Jersey 07950 (US)**
• **BACKSTROM, Johan U.**
**Morris Plains, New Jersey 07950 (US)**
• **CHEN, Tongwen**
**Morris Plains, New Jersey 07950 (US)**

(74)  Representative: **Houghton, Mark Phillip**
**Patent Outsourcing Limited**
**1 King Street**
**Bakewell, Derbyshire DE45 1DZ (GB)**

(56)  References cited:
**US-A1- 2012 130 547      US-A1- 2016 246 185**
**US-A1- 2018 087 221      US-B1- 6 807 510**
**US-B2- 7 650 195        US-B2- 7 987 003**

• **JUNQIANG FAN ET AL: "Two-dimensional frequency response analysis and insights for weight selection in cross-directionai model predictive control", 42ND. IEEE CONFERENCE ON DECISION AND CONTROL.(CDC). MAUI, HI, DEC. 9 - 12, 2003; [IEEE CONFERENCE ON DECISION AND CONTROL], NEW YORK, NY : IEEE, US, vol. 4, 9 December 2003 (2003-12-09), pages 3717 - 3723, XP010686520, ISBN: 978-0-7803-7924-4**

**(Cont. next page)**

- **NING HE ET AL: "Robust Tuning of Cross-Directional Model Predictive Controllers for Paper-Making Processes", IEEE TRANSACTIONS ON CONTROL SYSTEMS TECHNOLOGY., vol. 26, no. 5, 11 August 2017 (2017-08-11), US, pages 1619 - 1634, XP055753347, ISSN: 1063-6536, DOI: 10.1109/ TCST.2017.2731322**
- **NING HE ET AL: "Robust Tuning of Cross-Directional Model Predictive Controllers for Paper-Making Processes - IEEE Journals & Magazine", IEEE TRANSACTIONS ON CONTROL SYSTEMS TECHNOLOGY, 11 August 2017 (2017-08-11), XP055753306, Retrieved from the Internet <URL:https://ieeexplore.ieee.org/ document/8008797> [retrieved on 20201124], DOI: 10.1109/TCST.2017.2731322**

**Description**

CROSS-REFERENCE TO RELATED APPLICATIONS AND PRIORITY CLAIM

This application claims priority under 35 U.S.C. § 1 19(e) to U.S. Provisional Patent Application No. 62/467,622 and U.S. Provisional Patent Application No. 62/467,803, both of which were filed on March 6, 2017.

TECHNICAL FIELD

This disclosure relates generally to industrial process control and automation systems. More specifically, this disclosure relates to a method and apparatus for designing model-based control having spatial robustness for multiple-array cross-direction (CD) web manufacturing or processing systems or other systems.

PRIOR ART

Relevant prior art documents include US 7 650 195 B2 (Honeywell ASCA Inc); JUNQIANG FAN ET AL: "Two-dimensional frequency response analysis and insights for weight selection in cross-directionai model predictive control", 42ND. IEEE CONFERENCE ON DECISION AND CONTROL. (CDC). MAUI, HI, DEC. 9 - 12, 2003; [IEEE CONFERENCE ON DECISION AND CONTROL], NEW YORK, NY : IEEE, US, vol. 4, 9 December 2003 (2003-12-09), pages 3717-3723, XP010686520, ISBN: 978-0-7803-7924-4; NING HE ET AL: "Robust Tuning of Cross-Directional Model Predictive Controllers for Paper-Making Processes", IEEE TRANSACTIONS ON CONTROL SYSTEMS TECHNOLOGY., vol. 26, no. 5, 11 August 2017 (2017-08-11), pages 1619-1634, XP055753347, US, ISSN: 1063-6536, DOI: 10.1109/TCST.2017.2731322 ; Ning He ET AL: "Robust Tuning of Cross-Directional Model Predictive Controllers for Paper-Making Processes - IEEE Journals & Magazine", IEEE Transactions on Control Systems Technology, 11 August 2017 (2017-08-11), XP055753306, DOI: 10.1109/TCST.2017.2731322; and US 2018/087221 AI (HE NING [CA] ET AL).

BACKGROUND

Sheets or other webs of material are used in a variety of industries and in a variety of ways. These materials can include paper, multi-layer paperboard, and other products manufactured or processed in long webs. As a particular example, long webs of paper can be manufactured and collected in reels. These webs of material are often manufactured or processed at high rates of speed, such as speeds of up to one hundred kilometers per hour or more.

It is often necessary or desirable to measure one or more properties of a web of material as the web is being manufactured or processed. The measurements can be used by one or more process controllers to adjust the manufacturing or processing of the web. A process controller that implements model predictive control (MPC) or other model-based control can use one or more models to predict the future behavior of a web manufacturing or processing system. Control signals for adjusting the system are generated based on the predicted behavior of the system. The control of a property across a width of the web is referred to as cross-direction ("CD") control, while the control of a property along a length of the web is referred to as machine-direction ("MD") control.

CD control of a web is a difficult control problem when there are multiple actuator beams and multiple measurements in a web manufacturing or processing system. MPC or other model-based control could be used to address this problem. However, the tuning of an MPC or other model-based controller to achieve robust performance can be challenging for a number of reasons. One reason is that the tuning parameters typically available to users are not intuitive, and trial and error tuning attempts can be time-consuming and frustrating. Another reason is that automated tuning algorithms relying on robust control theory may require a user with an advanced understanding of control theory and involve abstract parameters.

The present invention in its various aspects is as set out in the appended claims.

SUMMARY

This disclosure provides a method and apparatus for designing model- based control having spatial robustness for multiple-array cross-direction (CD) web manufacturing or processing systems or other systems according to the appended set of claims.

In a first embodiment, a method includes obtaining one or more models associated with a model-based controller in an industrial process having multiple actuator arrays. The method also includes performing spatial tuning of the controller, where the spatial tuning includes identifying weighting matrices that suppress one or more frequency components in actuator profiles of the actuator arrays.

In a second embodiment, an apparatus includes at least one memory configured to store one or more models associated with a model-based controller in an industrial process having multiple actuator arrays. The apparatus also includes at least one processing device configured to perform spatial tuning of the controller. To perform the spatial tuning, the at least one processing device is configured to identify weighting matrices that suppress one or more frequency components in actuator profiles of the actuator arrays.

In a third embodiment, a non-transitory computer readable medium contains instructions that when executed cause at least one processing device to obtain one or more models associated with a model-based controller in an industrial process having multiple actuator arrays and perform spatial tuning of the controller. The spatial tuning includes identifying weighting matrices that suppress one or more frequency components in actuator profiles of the actuator arrays.

Other technical features may be readily apparent to one skilled in the art from the following figures, descriptions, and claims.

BRIEF DESCRIPTION OF THE DRAWINGS

For a more complete understanding of this disclosure, reference is now made to the following description, taken in conjunction with the accompanying drawings, in which:

FIGURE 1 illustrates an example web manufacturing or processing system according to this disclosure;
FIGURE 2 illustrates an example device supporting the design of multiple-array cross-direction (CD) model-based control for web manufacturing or processing systems or other systems according to this disclosure;
FIGURE 3 illustrates an example representation of closed-loop control of a web manufacturing or processing system or other system according to this disclosure;
FIGURE 4 illustrates another example representation of closed-loop control of a web manufacturing or processing system or other system according to this disclosure;
FIGURE 5 illustrates example results obtained when identifying weighting matrices as part of a spatial tuning algorithm according to this disclosure;
FIGURES 6 and 7 illustrate example effects of changing a general weight on sensitivity functions during spatial tuning according to this disclosure;
FIGURE 8 illustrates example results obtained using event-based control as part of a temporal tuning algorithm according to this disclosure; and
FIGURE 9 illustrates an example method for tuning the operation of a model-based controller according to this disclosure.

DETAILED DESCRIPTION

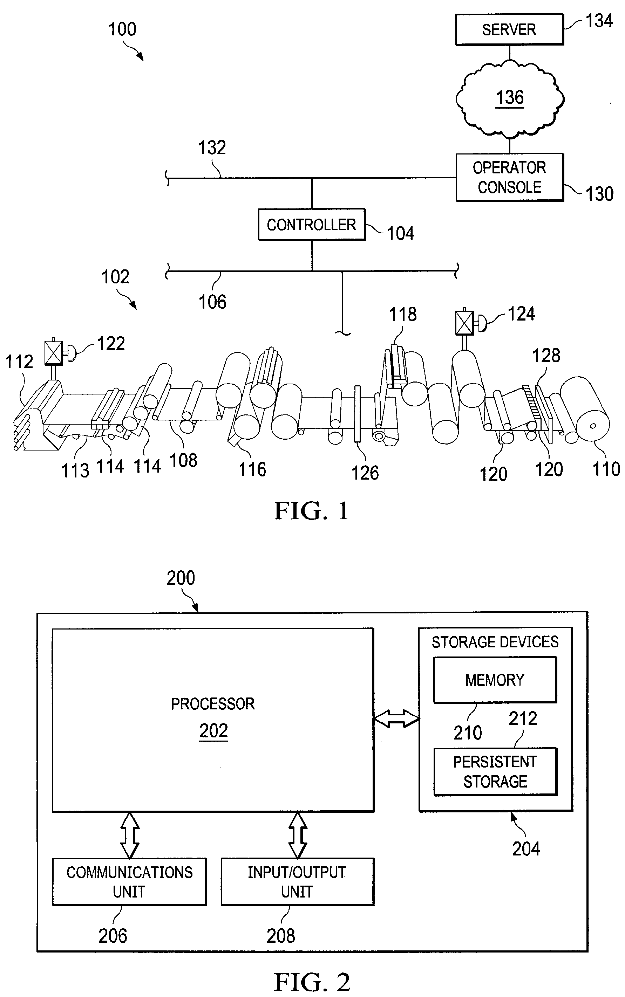

FIGURES 1 through 9, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

As noted above, cross-direction (CD) control of a web of material is a difficult control problem when there are multiple actuator beams and multiple measurements in a web manufacturing or processing system. Model predictive control (MPC) or other model-based control could be used to address this problem, but there are various issues with tuning an MPC or other model-based controller.

There are multiple aspects to a CD tuning problem, including spatial tuning and temporal tuning. Spatial tuning involves tuning a controller to reduce the steady-state variability of a web's CD profile without considering how the profile will move from a current profile to a final profile. Temporal tuning involves choosing parameters so that the controller makes actuator movements that bring actuator and measurement profiles from their initial values to their final values quickly and smoothly, regardless of the specific profiles.

This disclosure describes automated tuning techniques that provide improved or optimal controller tuning parameters for MPC or other model-based controllers. The automated tuning techniques involve separate spatial tuning and temporal tuning for an MPC or other model-based controller. The controller tuning parameters can be generated using intuitive information about the quality of a process model and the desired temporal control performance. As a result, a non-expert in control theory can provide a small amount of information to a tuning algorithm, and the tuning algorithm can operate to tune a controller.

FIGURE 1 illustrates an example web manufacturing or processing system 100 according to this disclosure. As shown in FIGURE 1, the system 100 includes a paper machine 102, a controller 104, and a network 106. The paper machine 102 includes various components used to produce a paper product, namely a paper web 108 that is collected at a reel 110. The controller 104 monitors and controls the operation of the paper machine 102, which may help to maintain or increase the quality of the paper web 108 produced by the paper machine 102. In the following description, the machine-direction (MD) of the web 108 denotes the direction along the (longer) length of the web 108, while the cross-direction (CD) of the web 108 denotes the direction along the (shorter) width of the web 108. Both MD and CD control of web properties could occur in the system 100 in order to help ensure that quality specifications or other specifications of the web 108 are satisfied.

In this example, the paper machine 102 includes at least one headbox 112, which distributes a pulp suspension uniformly across the machine onto a continuous moving wire screen or mesh 113. The pulp suspension entering the headbox 112 may contain, for example, 0.2-3% wood fibers, fillers, and/or other materials, with the remainder of the suspension being water.

Arrays of drainage elements 114, such as vacuum boxes, remove as much water as possible to initiate the formation of the web 108. An array of steam actuators 116 produces hot steam that penetrates the paper web 108 and releases the latent heat of the steam into the paper web 108. An array of rewet shower actuators 118 adds small droplets of water (which may be air atomized) onto the surface of the paper web 108. The paper web 108 is then often passed through a calender having several nips of counter-rotating rolls. Arrays of induction heating actuators 120 heat the shell surfaces of various ones of these rolls.

Two additional actuators 122-124 are shown in FIGURE 1. A thick stock flow actuator 122 controls the consistency of incoming stock received at the headbox 112. A steam flow actuator 124 controls the amount of heat transferred to the paper web 108 from drying cylinders. The actuators 122-124 could, for example, represent valves controlling the flow of stock and steam, respectively. These actuators may be used for controlling the dry weight and moisture of the paper web 108. Additional flow actuators may be used to control the proportions of different types of pulp and filler material in the thick stock and to control the amounts of various additives (such as retention aid or dyes) that are mixed into the stock.

This represents a brief description of one type of paper machine 102 that may be used to produce a paper product. Additional details regarding this type of paper machine 102 are well-known in the art and are not needed for an understanding of this disclosure.

In order to control the paper-making process, one or more properties of the paper web 108 may be continuously or repeatedly measured. The web properties can be measured at one or various stages in the manufacturing process. This information may then be used to adjust the paper machine 102, such as by adjusting various actuators within the paper machine 102. This may help to compensate for any variations of the web properties from desired targets, which may help to ensure the quality of the web 108.

As shown in FIGURE 1, the paper machine 102 includes one or more scanners 126-128, each of which may include one or more sensors. Each scanner 126-128 is capable of measuring one or more characteristics of the paper web 108. For example, each scanner 126-128 could include sensors for measuring the tension, caliper, moisture, anisotropy, basis weight, color, gloss, sheen, haze, surface features (such as roughness, topography, or orientation distributions of surface features), or any other or additional characteristics of the paper web 108.

Each scanner 126-128 includes any suitable structure or structures for measuring or detecting one or more characteristics of the paper web 108, such as one or more sets of sensors. The use of scanners represents one particular embodiment for measuring web properties. Other embodiments could be used, such as those including one or more stationary sets or arrays of sensors, deployed in one or a few locations across the web or deployed in a plurality of locations across the whole width of the web such that substantially the entire web width is measured.

The controller 104 receives measurement data from the scanners 126-128 and uses the data to control the paper machine 102. For example, the controller 104 may use the measurement data to adjust any of the actuators or other components of the paper machine 102. The controller 104 includes any suitable structure for controlling the operation of at least part of the paper machine 102, such as a computing device. Note that while a single controller 104 is shown here, multiple controllers 104 could be used, such as different controllers that control different variables of the web.

The network 106 is coupled to the controller 104 and various components of the paper machine 102 (such as the actuators and scanners). The network 106 facilitates communication between components of the system 100. The network 106 represents any suitable network or combination of networks facilitating communication between components in the system 100. The network 106 could, for example, represent a wired or wireless Ethernet network, an electrical signal network (such as a HART or FOUNDATION FIELDBUS network), a pneumatic control signal network, or any other or additional network(s).

The controller(s) 104 can operate to control one or more aspects of the paper machine 102 using one or more models. For example, each model could associate one or more manipulated variables with one or more controlled variables. A controlled variable generally represents a variable that can be measured or inferred and that is ideally controlled to be at or near a desired setpoint or within a desired range of values. A manipulated variable generally represents a variable that can be adjusted in order to alter one or more controlled variables.

In order to tune a controller 104, at least one operator station 130 can communicate with the controller 104 over a network 132. The operator station 130 generally represents a computing device that supports one or more techniques for tuning of MPC and other model-based controllers.

The techniques for tuning of model-based controllers are described in more detail below. In general, these techniques involve performing spatial tuning of a controller and temporal tuning of the controller. Spatial tuning generally involves attempting to tune weighting matrices used by the controller so that a steady-state property across a web is consistent. In some embodiments, the spatial tuning generally includes identifying weighting matrices that suppress one or more frequency components (such as one or more high-frequency components) in actuator profiles of certain actuators. Temporal tuning generally involves attempting to satisfy time-domain performance indices, such as settling times and overshoots (which are more intuitive to technician-level operators, maintenance personnel, or other non-expert personnel who may not be intimately familiar with control theory). In some embodiments, the temporal tuning generally includes adjusting one or more parameters of a multivariable temporal filter that is used to smooth reference trajectories of the actuator profiles. A tuning algorithm for model-based controllers could use one or both of the spatial tuning and the temporal tuning techniques described in this patent document.

In particular embodiments, the spatial tuning involves the following steps. For each process input, the worst-case cutoff frequency over all output channels considering all process models is found, given parametric uncertainty. Based on the process models and the worst-case cutoff frequencies, a set of weighting matrices is designed to penalize high-frequency actuator variability. A multiplier for a spatial frequency weighted actuator variability term in an MPC cost function is found that guarantees robust spatial stability.

In particular embodiments, the temporal tuning involves the following steps. Uncertainty specifications are provided for temporal parameters of the process models, and overshoot limits (such as $2\sigma$ or "2 sigma" overshoot limits) are specified for the CD actuator profiles. Robust stability theory is used to find a minimum bound for profile trajectory tuning parameters, and a frequency-domain technique is used to help reduce the search range for the profile trajectory tuning parameters. An intelligent search is performed for the tuning parameters that minimize measurement $2\sigma$ settling times without exceeding the overshoot limits.

Note that the mathematics involved in these types of tuning operations are more complicated when there are multiple actuator beams compared to a single actuator beam. The concept of making a simplifying approximation (using the robust control theoretic idea of characterizing a group of uncertain systems by the polytopic system) can be used to control the computational difficulty of finding the spatial frequency weighted actuator variability term multiplier in the last step of the spatial tuning. Also, the concept of using process domain knowledge to choose dominant input-output pairings can be used to help reduce the computational difficulty of the temporal tuning. In addition, the temporal tuning algorithm may rely on a process simulation, which can take more and more time as the size of the process (defined by the number of actuator beams and measurements profiles) increases. In some embodiments, an event-trigger simulation method is used to reduce simulation time without reducing accuracy. Additional details regarding example implementations of these types of spatial and temporal tuning techniques are provided in the description below. Note that these details relate to specific implementations of the tuning techniques and that other implementations could be used in any given system.

Each operator station 130 denotes any suitable computing device that can execute logic (such as one or more software applications) to perform controller tuning. Each operator station 130 could, for example, denote a desktop computer, laptop computer, or tablet computer. The network 132 represents any suitable network or combination of networks that can transport information, such as an Ethernet network. Note that while the operator station 130 is described as implementing the technique(s) for tuning of model-based controllers, other types of devices could also be used. For instance, the operator station 130 could interact with a server 134 via a network 136, and the server 134 could execute the algorithms used to implement one or more techniques for tuning of model-based controllers. In this case, the operator station 130 could present a graphical user interface and interact with a user. This may allow, for example, an operator of the server 134 to provide the controller tuning as a service. The network 136 could denote any suitable network or combination of networks, such as the Internet.

In some embodiments, the tuning algorithm could be implemented using one or more software routines that are executed by one or more processors of one or more computing devices. As a particular example, the tuning algorithm could be implemented using the MATLAB software package. Also, the software could support a user interface that allows a user to enter the problem information in a simple manner and to obtain tuning results of the algorithm.

Although FIGURE 1 illustrates one example of a web manufacturing or processing system 100, various changes may be made to FIGURE 1. For example, other systems could be used to produce other paper or non-paper products. Also, while shown as including a single paper machine 102 with various components and a single controller 104, the system 100 could include any number of paper machines or other machinery having any suitable structure, and the system 100 could include any number of controllers. In addition, FIGURE 1 illustrates one example operational environment in which MPC or other model-based controller(s) can be tuned. This functionality could be used in any other suitable system, regardless of whether the system is used to manufacture or process webs of material.

FIGURE 2 illustrates an example device 200 supporting the design of multiple-array CD model-based control for web manufacturing or processing systems or other systems according to this disclosure. The device 200 could, for example, denote the operator station 130 or the server 134 in FIGURE 1. However, the device 200 could be used to tune any suitable model-based controller(s) in any suitable system(s).

As shown in FIGURE 2, the device 200 includes at least one processor 202, at least one storage device 204, at least one communications unit 206, and at least one input/output (I/O) unit 208. Each processor 202 can execute instructions, such as those that may be loaded into a memory 210. Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 could include at least one network interface card or wireless transceiver facilitating communications over at least one wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device.

Although FIGURE 2 illustrates one example of a device 200 supporting the design of multiple-array CD model-based control for web manufacturing or processing systems or other systems, various changes may be made to FIGURE 2. For example, various components in FIGURE 2 could be combined, further subdivided, or omitted and additional components could be added according to particular needs. Also, computing devices come in a wide variety of configurations, and FIGURE 2 does not limit this disclosure to any particular computing device.

The following description provides details of specific implementations of the spatial and temporal tuning techniques mentioned above. More specifically, the following description discusses the robust tuning problem of multiple-array cross-direction model predictive control (CD-MPC) for uncertain paper-making processes, although the same or similar approaches could be used with other processes. An automated controller tuning algorithm is described that enables (i) the spatial variability of measurement profiles to be reduced and (ii) the desired temporal performance to be achieved under user-specified parametric uncertainties. Based on the decoupling feature of the spatial and temporal frequency elements, CD-MPC tuning and design can be realized separately. In the spatial tuning portion of the algorithm, CD-MPC weighting matrices $S_{b,j}$ are appropriately designed so that harmful high-frequency elements in each actuator profile are suppressed. In the temporal tuning portion of the algorithm, a multivariable temporal filter is employed to smooth reference trajectories for all outputs, and an automated tuning algorithm is used to adjust the filter parameters to achieve pre-specified performance indices.

Note that there is often unavoidable model-plant mismatch between the modeled behavior of an industrial process and its actual behavior, which makes spatial and temporal tuning more difficult. For example, the model parameters of CD processes may be identified via bump test experiments and are normally subject to model uncertainties. Moreover, geometric misalignment between CD actuators and measurement sensors (which could be caused by web wandering and shrinkage) also results in some nonlinear uncertainties to system models utilized in CD model-based controllers. The spatial and temporal tuning algorithms described below are therefore designed to be robust against model parameter uncertainties. As described in more detail below, given a system model and user-specified parametric uncertainties, the weighting matrices $S_{b,j}$ and the corresponding weights can be automatically designed so that robust stability is guaranteed and improved performance is achieved.

## Example Problem Statement

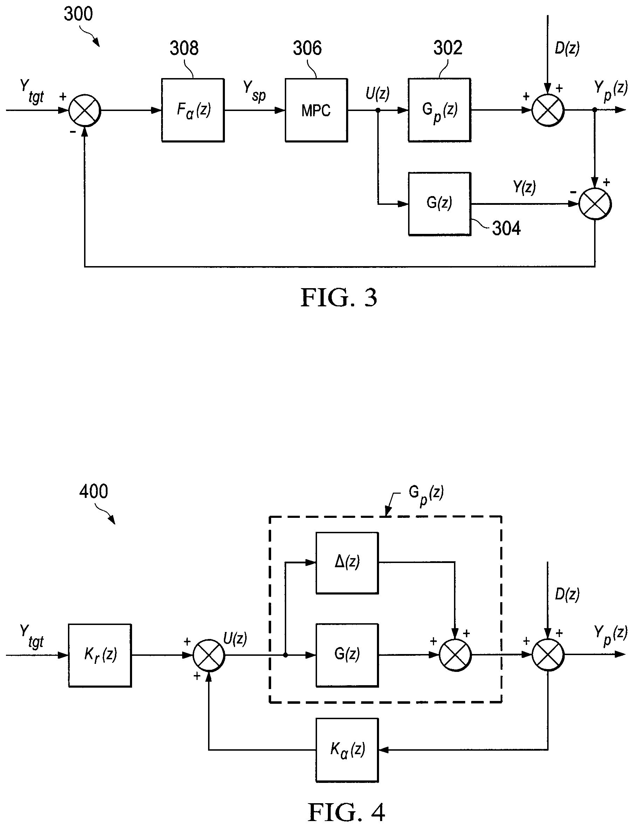

FIGURE 3 illustrates an example representation 300 of closed-loop control of a web manufacturing or processing system or other system according to this disclosure. More specifically, the representation 300 illustrates closed-loop CD control of a web manufacturing or processing system having multiple CD arrays. In

FIGURE 3, a process 302 (denoted $G_p(z)$) represents the actual industrial process having the CD arrays, and a nominal model 304 (denoted $G(z)$) represents the nominal or modeled behavior of the same industrial process. As noted above, there is often some mismatch between the behavior of the actual process 302 and the modeled behavior defined by the model 304. The representation 300 also includes a model-based controller 306 (in this example an MPC controller) and a temporal filter 308 (denoted $F_\alpha(z)$). The controller 306 could represent the controller 104 in FIGURE 1.

Various signals are shown in FIGURE 3, including an output target $Y_{tgt}$, a reference trajectory $Y_{sp}$, an actuator profile $U(z)$, a disturbance profile $D(z)$, and a measurement profile $Y_p(z)$. The measurement profile $Y_p(z)$ denotes actual process variable measurements associated with the process 302, such as measurements of one or more characteristics across the web 108. These measurements may differ from a modeled or expected measurement profile $Y(z)$ generated using the model 304. The output target $Y_{tgt}$ denotes the desired value(s) of the measurement profile. The reference trajectory $Y_{sp}$ denotes the difference between the output target and the measurement profile as modified by the temporal filter 308. The actuator profile U(z) denotes the outputs of the controller 306 that are provided to the actuators, such as control signals that cause the actuators to change the process 302. The actuator profile is designed to cause the measurement profile to move toward the output target or to maintain the measurement profile at the output target. The disturbance profile *D(z)* denotes noise or other disturbances that affect control of the process 302.

In some embodiments, the nominal model 304 can be expressed as:

$$Y(z) = G(z)U(z) + D(z), \quad G(z) = \begin{bmatrix} G_{11}h_{11}(z) & \cdots & G_{1N_u}h_{1N_u}(z) \\ \vdots & \ddots & \vdots \\ G_{N_y1}h_{N_y1}(z) & \cdots & G_{N_yN_u}h_{N_yN_u}(z) \end{bmatrix} \quad (1)$$

Here:

$$Y(z) = [y_1^T(z), \ldots, y_{N_y}^T(z)]^T, \quad y_i(z) \in C^{m_i} \quad (2)$$

$$U(z) = [u_1^T(z), \ldots, u_{N_u}^T(z)]^T, \quad u_j(z) \in C^{n_j} \quad (3)$$

$$D(z) = [d_1^T(z), \ldots, d_{N_y}^T(z)]^T, \quad d_i(z) \in C^{m_i} \quad (4)$$

$$G_{ij} \in R^{m_i \times n_j}, \quad h_{ij}(z) = \frac{(1-a_{ij})z^{-T_{d_{ij}}}}{1-a_{ij}z^{-1}} \quad (5)$$

$$i = 1, \ldots, N_y, \quad j = 1, \ldots, N_u \quad (6)$$

$N_y$ and $N_u$ are the numbers of controlled CD web properties and CD actuator beams, respectively, and $m_i$ and $n_j$ indicate the dimensions of the subsystem from the $j^{th}$ actuator beam $u_j$ to the $i^{th}$ measurement profile $y_i$. Also, $G_{ij}$ represents the subsystem's spatial interaction matrix from $u_j$ to $y_i$, and $h_{ij}$ represents the subsystem's temporal responses from $u_j$ to $y_i$. In addition, $a_{ij}$ and $T_{d_{ij}}$ are the time constant and delay in the discretized form, respectively.

The spatial interaction matrix $G_{ij}$ can have the following parameterized structure:

$$G_{ij} = [g_{1ij}, \ldots, g_{n_jij}] \in R^{m_i \times n_j} \quad (7)$$

where:

$$g_{kij} = f(x, \gamma_{ij}, \eta_{ij}, \xi_{ij}, \beta_{ij}, c_{kij}) =$$

$$\frac{\gamma_{ij}}{2} \left\{ e^{-\frac{\eta_{ij}(x-c_{kij}+\beta_{ij}\xi_{ij})^2}{\xi_{ij}^2}} cos\left[\frac{\pi(x-c_{kij}+\beta_{ij}\xi_{ij})}{\xi_{ij}}\right] + e^{-\frac{\eta_{ij}(x-c_{kij}-\beta_{ij}\xi_{ij})^2}{\xi_{ij}^2}} cos\left[\frac{\pi(x-c_{kij}-\beta_{ij}\xi_{ij})}{\xi_{ij}}\right] \right\}$$

$$x = 1, \ldots, m_i, \quad k = 1, \ldots, n_j \quad (8)$$

Here, $\gamma_{ij}$, $\eta_{ij}$, $\xi_{ij}$ and $\beta_{ij}$ are gain, attenuation, width, and divergence parameters, respectively, and are employed to characterize a spatial response of each specific actuator. Given the $k^{th}$ actuator, $c_{kij}$ is an alignment parameter that locates the center of the corresponding spatial response.

As noted above, mismatch often exists between the behavior of the actual process 302 and the modeled behavior defined by the model 304. Here, it is assumed that the actual process 302 can be characterized by a parametric perturbation of the nominal model 304 in Equation (1). At the same time, parametric uncertainties are often easy to understand and specify by end users, such as users in the pulp and paper industry. The actual process $G_p$ can then be described as follows.

$$G_p(z) = \begin{bmatrix} G_{11}^p h_{11}^p(z) & \cdots & G_{1N_u}^p h_{1N_u}^p(z) \\ \vdots & \ddots & \vdots \\ G_{N_y1}^p h_{N_y1}^p(z) & \cdots & G_{N_yN_u}^p h_{N_yN_u}^p(z) \end{bmatrix} \qquad (9)$$

where:

$$G_{ij}^p = [g_{1ij}^p, \ldots, g_{n_jij}^p] \qquad (10)$$

$$g_{kij}^p = f(x, \gamma_{ij}^p, \eta_{ij}^p, \xi_{ij}^p, \beta_{ij}^p, c_{kij}^p) \qquad (11)$$

$$\gamma_{ij}^p = (1 + r_{ij}^\gamma)\gamma_{ij}, \quad \eta_{ij}^p = (1 + r_{ij}^\eta)\eta_{ij} \qquad (12)$$

$$\xi_{ij}^p = \left(1 + r_{ij}^\xi\right)\xi_{ij}, \quad \beta_{ij}^p = \left(1 + r_{ij}^\beta\right)\beta_{ij} \qquad (13)$$

$$c_{kij}^p = c_{kij} + \varepsilon_{ij} \qquad (14)$$

$$h_{ij}^p(z) = \frac{\left(1 - a_{ij}^p\right)z^{-T_{d_{ij}}}}{1 - a_{ij}^p z^{-1}} \qquad (15)$$

$$a_{ij}^p = \left(1 + r_{ij}^a\right)a_{ij}, \quad T_{d_{ij}}^p = \left(1 + r_{ij}^{T_d}\right)T_{d_{ij}} \qquad (16)$$

$$k = 1, \ldots, n_j, \quad x = 1, \ldots, m_i, \quad i = 1, \ldots, N_y, \quad j = 1, \ldots, N_u \qquad (17)$$

The values $r_{ij}^\gamma \in [\underline{r}_{ij}^\gamma, \overline{r}_{ij}^\gamma]$, $r_{ij}^\eta \in [\underline{r}_{ij}^\eta, \overline{r}_{ij}^\eta]$, $r_{ij}^\xi \in [\underline{r}_{ij}^\xi, \overline{r}_{ij}^\xi]$, $r_{ij}^\beta \in [\underline{r}_{ij}^\beta, \overline{r}_{ij}^\beta]$, $r_{ij}^a \in [\underline{r}_{ij}^a, \overline{r}_{ij}^a]$,

$r_{ij}^{T_d} \in [\underline{r}_{ij}^{T_d}, \overline{r}_{ij}^{T_d}]$, and $\varepsilon_{ij} \in \left[-\underline{\varepsilon}_{ij}\frac{m_i}{n_j}, \overline{\varepsilon}_{ij}\frac{m_i}{n_j}\right]$ characterize the parametric uncertainties. These trust ranges are also denoted as $\gamma_{ij}^p \in [\underline{\gamma}_{ij}, \overline{\gamma}_{ij}]$, $\eta_{ij}^p \in [\underline{\eta}_{ij}, \overline{\eta}_{ij}]$, $\xi_{ij}^p \in [\underline{\xi}_{ij}, \overline{\xi}_{ij}]$,

$\beta_{ij}^p \in [\underline{\beta}_{ij}, \overline{\beta}_{ij}]$, $a_{ij}^p \in [\underline{a}_{ij}, \overline{a}_{ij}]$, and $T_{d_{ij}}^p \in [\underline{T}_{d_{ij}}, \overline{T}_{d_{ij}}]$, and $\varepsilon_{ij} \in [\underline{\varepsilon}_{ij}, \overline{\varepsilon}_{ij}]$ for brevity. Since $\varepsilon_{ij}$ affects all

$c_{kij}^p$ (where k = 1, ..., $n_j$), then $\varepsilon_{ij} \in [\underline{\varepsilon}_{ij}, \overline{\varepsilon}_{ij}]$ represents the trust range of the alignment parameter. Therefore, a set of perturbed models can be characterized by the uncertain model parameters $\gamma_{ij}^p$, $\eta_{ij}^p$, $\xi_{ij}^p$, $\beta_{ij}^p$, $\varepsilon_{ij}$, $a_{ij}^p$, and $T_{d_{ij}}^p$.

An optimal control problem to be used by the controller 306 is defined as:

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) + \right.$$

$$\sum_{i=0}^{H_u-1} \left[ \Delta U(k+i)^T Q_2 \Delta U(k+i) + \left( U(k+i) - U_{sp}(k+i) \right)^T Q_3 \left( U(k+i) - \right.\right.$$

$$\left.\left. U_{sp}(k+i) \right) + U(k+i)^T Q_4 U(k+i) \right] \right\} \tag{18}$$

**which is subject to system dynamics and the following constraint:**

$$\Omega \Delta U(k) \le b - \Gamma U(k-1) \tag{19}$$

where:

$$\Delta U(k) = U(k) - U(k-1) \tag{20}$$

$\hat{Y} \in R^{\sum_{i=1}^{N_y} m_i}$ represents the output prediction, $Y_{sp} \in R^{\sum_{i=1}^{N_y} m_i}$ are the setpoints for the controlled properties, and $H_p$ is the prediction horizon. $Q_1 \in R^{\sum_{i=1}^{N_y} m_i \times \sum_{i=1}^{N_y} m_i}$ is the diagonal penalty matrix for controlled variables, $Q_2 \in R^{\sum_{j=1}^{N_u} n_j \times \sum_{j=1}^{N_u} n_j}$ is the diagonal penalty matrix for changes in manipulated variables, and $Q_3 \in R^{\sum_{j=1}^{N_u} n_j \times \sum_{j=1}^{N_u} n_j}$ is the penalty matrix for differences between the manipulated variables and their references. More specifically, $Q_1$, $Q_2$, and $Q_3$ can have the following form.

$$Q_1 = diag(q_{11} I_{m_1}, q_{12} I_{m_2}, \dots, q_{1N_y} I_{m_{N_y}} \tag{21}$$

$$Q_2 = diag(q_{21} I_{n_1}, q_{22} I_{n_2}, \dots, q_{2N_u} I_{n_{N_u}} \tag{22}$$

$$Q_3 = diag(q_{31} I_{n_1}, q_{32} I_{n_2}, \dots, q_{3N_u} I_{n_{N_u}} \tag{23}$$

where $diag(X_1, X_2, \dots, X_N)$ denotes a block diagonal matrix with diagonal elements $X_1, X_2, \dots, X_N$. $I_m$ is the $m$-by-$m$ identity matrix, and $q_{1i}$ (where $i = 1, \dots, N_y$) and $q_{kj}$ (where $k = 2, 3$ and $j = 1, \dots, N_u$) are the scalar weights. $Q4$ is a weighting matrix on actuator bending/picketing and can have the following form:

$$Q_4 = diag(q_{41} S_{b,1}^T S_{b,1}, q_{42} S_{b,2}^T S_{b,2}, \dots, q_{4N_u} S_{b,N_u}^T S_{b,N_u}) \tag{24}$$

where:

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix} \tag{25}$$

Here, $q_{4j}$ (where $j = 1, \dots, N_u$) are scalar weights and $S_{b,j} \in R^{n_j \times n_j}$ is the bending moment matrix with appropriate dimension for each actuator profile. Note that, for each actuator profile, the first- and second-order derivatives are incorporated in $S_{b,j}$, so that the bending behavior is penalized in the cost function of the controller 306. $\Omega$, $\Gamma$, and b are constraint matrices (vectors) determined based on physical limitations of the actual process 302.

For a single-array CD-MPC controller, a temporal filter 308 (such as one designed in accordance with U.S. Patent Application No. 15/273 ,702) can be utilized to smooth the reference trajectory. However, in a multiple-array CD control systems, there is more than one web property, and each property can have its own importance and satisfaction level. Thus, a specific temporal filter 308 can be introduced for each measurement profile. For measurement profile $y_i(k)$, the filtered trajectory can be expressed as:

$$Y_{sp,i}(k) = F_{\alpha_i}\left(y_{tgt,i}(k) - d_i(k)\right), \quad i = 1, \ldots, N_y \qquad (26)$$

Here, $y_{tgt,i}(k)$ is the output target, and $d_i(k) = y_{p,i}(k) - \hat{y}_i(k)$ is the disturbance estimated based on the process output $Y_p(k)$ and predicted output $\hat{Y}(k)$. $F_{\alpha_i}$ is the time-domain implementation of $f_{\alpha_i}(z)$ based on $y_{sp,i}(z) = f_{\alpha_i}(z)(y_{tgt,i}(z) - d_i(z))$, and $f_{\alpha_i}(z)$ is the temporal filter defined as:

$$f_{\alpha_i}(z) = \frac{(1-a_i^r)z^{-T_{d_i}^r}}{1-a_i^r z^{-1}} \qquad (27)$$

where $a_i^r = e^{-\frac{\Delta T}{\alpha_i \tau_i}}$ and $\Delta T$ is the sampling time. Note that the parameters $\tau_i$ and $T_{d_i}^r$ are normally designed based on the time constant and delay of the dominant or primary subsystem for the $i^{th}$ measurement profile. This is done in order to make the temporal property of the closed-loop system dependent on that of the dominant or primary open-loop temporal response of the system. Based on this, the temporal filter 308 in FIGURE 3 can be constructed based on a diagonal structure of $f_{\alpha_i}(z)$ (where i = 1, ..., $N_y$) to generate the references for all measurement profiles simultaneously.

In actual practice, when there are fluctuations in the measurement profiles, it may be necessary or desirable for the CD control system to respond quickly in order to minimize the fluctuations. At the same time, it may be necessary or desirable for the control actuators to not be moved aggressively. This can be realized by appropriately adjusting the parameter(s) $\alpha_i$ in each temporal filter with the value of $Q_2$ fixed.

In the actual implementation of a multiple-array CD-MPC control system, the optimal control signal could be obtained by solving a constrained quadratic programming (QP) optimization problem for which no explicit solution usually exists. To facilitate theoretical analysis, it is possible to exploit the unconstrained QP problem as in Fan et al., "Two-dimensional frequency analysis for unconstrained model predictive control of cross-direction processes," Automatica, vol. 40, no. 11, November 2004, pp. 1891-1903 to provide a tuning guide for the parameters.

To this end, the representation 300 shown in FIGURE 3 can be rearranged as shown in FIGURE 4. FIGURE 4 illustrates another example representation 400 of closed-loop control of a web manufacturing or processing system or other system according to this disclosure. In FIGURE 4, $K_r(z)$ and $K_\alpha(z)$ are derived and reformulated based on the explicit solution of the unconstrained CD-MPC problem. Note that as the unconstrained MPC problem is exploited, the resultant closed-loop system is linear. In FIGURE 4, the actual process $G_p(z)$ could be represented as follows:

$$G_p(z) = G(z) + \Delta(z) \qquad (28)$$

in which $\Delta(z)$ denotes the model uncertainty.

Similar to the single-array CD-MPC form, robust stability of the multiple-array case can also be analyzed using the small gain theorem. Specifically, given the parametric uncertainties specified in Equations (10)-(17), the closed-loop system in FIGURE 4 remains robustly stable for every $G_p(z)$ when it is nominally stable, and:

$$||T_{ud}(z)\Delta(z)||_\infty < 1 \rightarrow \bar{\sigma}\left(T_{ud}(e^{i\omega})\Delta(e^{i\omega})\right) < 1, \forall \omega \qquad (29)$$

$$T_{ud}(z) = K_\alpha(z)[I - G(z)K_\alpha(z)]^{-1} \qquad (30)$$

Here, $\bar{\sigma}(A)$ denotes the maximum singular value of matrix $A$, and $\Delta(z)$ is the model uncertainty in Equation (28). Also, $T_{ud}(z) \in C^{\sum_{j=1}^{N_u} n_j \times \sum_{i=1}^{N_y} m_i}$ is the sensitivity function from the disturbance profile $D(z)$ to the input profile $U(z)$ at the nominal case.

In addition to the basic requirement that the closed-loop system be stable, the multiple-array CD-MPC controller that is designed here aims to optimize performance in terms of reduced fluctuations of measurement profiles, suppressed high-frequency picketing of actuators, and avoidance of aggressive behavior of the actuators. These performances can be reflected in the closed-loop transfer functions $T_{ud}(z)$ in Equation (29) and $T_{yd}(z)$ as follows:

$$T_{yd}(z) = [I - G(z)K_\alpha(z)]^{-1} \qquad (31)$$

where $T_{yd}(z) \in C^{\sum_{i=1}^{N_y} m_i \times \sum_{i=1}^{N_y} m_i}$ . In the following discussion, the transfer functions $T_{ud}(z)$ and $T_{yd}(z)$ are used extensively in the design and tuning procedure of the controller parameters.

Given the multiple-array CD-MPC system shown in FIGURE 3, the objectives of controller tuning can include ensuring that the closed-loop system in FIGURE 3 is robustly stable, the steady-state variation of the measurement profiles is minimized, and temporal performance indices (such as $2\sigma$ settling times and overshoots) satisfy the end users' specifications. In the multiple-array CD-MPC system shown in FIGURE 3, the closed-loop system behavior is affected by the following parameters: the matrices $Q_1$ to $Q_4$, the temporal filter parameters $\alpha_i$ (where $i = 1, ..., N_y$), the prediction horizon $H_p$, and the control horizon $H_u$. In some embodiments, the prediction horizon $H_p$ is selected to be four times the summation of the largest time constant and delay within all subsystems. Also, in some embodiments, the control horizon $H_u = 1$ can be utilized in large-scale MPC (although it can be increased based on practical situations), and $Q_1$ is often fixed in robust tuning. Consequently, only $Q_3$, $Q_4$, and $\alpha_i$ (where $i = 1, ..., N_y$) are the tuning parameters used below. Given these tuning parameters, a two-dimensional frequency-domain analysis can be performed first to simplify the tuning problem by decoupling the tuning procedure into spatial tuning and temporal tuning.

Two-Dimensional Frequency-Domain Analysis

Given a multiple-array CD system $G(z)$, if all subsystems $G_{ij}(z)$ are rectangular circulant matrices (RCMs), the nominal plant $G(z)$ itself is a block rectangular circulant matrix. This can be transformed into the two-dimensional frequency-domain via:

$$\{g(v_0, z), ..., g(v_{k_{max}}, z)\} = Diag(P_y F_y G(z) F_u^H P_u^T) \qquad (32)$$

Here, $g(v_k, z) \in C^{N_y \times N_u}$ denotes the transfer function G(z) at a given spatial frequency $v_k$ and can be represented as:

$$g(v_k, z) = \begin{bmatrix} g_{11}(v_k, z) & \cdots & g_{1N_u}(v_k, z) \\ \vdots & \ddots & \vdots \\ g_{N_y 1}(v_k, z) & \cdots & g_{N_y N_u}(v_k, z) \end{bmatrix} \qquad (33)$$

$P_y \in R^{\sum_{i=1}^{N_y} m_i \times \sum_{i=1}^{N_y} m_i}$ and $P_u \in R^{\sum_{i=1}^{N_u} n_i \times \sum_{i=1}^{N_u} n_i}$ are unitary permutation matrices. Also, $F_y$ and $F_u$ are block diagonal matrices as follows:

$$F_y = diag\left(F_{m_1}, ..., F_{m_{N_y}}\right), \ F_u = diag(F_{n_1}, ..., F_{n_{N_u}}) \qquad (34)$$

where $F_{m_i} \in C^{m_i \times m_i}$ and $F_{n_j} \in C^{n_j \times n_j}$ are complex Fourier matrices. "Diag(A)" denotes the operation of obtaining the (block) diagonal part of $A$, and $k_{max}$ in $v_{k_{max}}$ indicates the spatial actuator Nyquist frequency.

Given the block rectangular circulant property of $G(z)$, the sensitivity functions $T_{yd}(z)$ and $T_{ud}(z)$ in Equations (29) and (31) are also block rectangular circulant matrices. Therefore, the transfer functions $T_{yd}(z)$ and $T_{ud}(z)$ can be transformed into the two-dimensional frequency-domain via:

$$\{t_{yd}(v_0, z), ..., t_{yd}(v_{k_{max}}, z) = Diag(P_y F_y T_{yd}(z) F_y^H P_y^T) \qquad (35)$$

$$\{t_{ud}(v_0, z), ..., t_{ud}(v_{k_{max}}, z) = Diag(P_u F_u T_{ud}(z) F_y^H P_y^T) \qquad (36)$$

where $t_{yd}(v_k, z) \in C^{N_y \times N_y}$ and $t_{ud}(v_k, z) \in C^{N_u \times N_y}$ denote the two-dimensional form of transfer functions $T_{yd}(z)$ and $T_{ud}(z)$ at

spatial frequency $v_k$. These values can be represented as:

$$t_{yd}(v_k, z) = \begin{bmatrix} t_{yd11}(v_k, z) & \cdots & t_{yd1N_y}(v_k, z) \\ \vdots & \ddots & \vdots \\ t_{ydN_y1}(v_k, z) & \cdots & t_{ydN_yN_y}(v_k, z) \end{bmatrix} \qquad (37)$$

$$t_{ud}(v_k, z) = \begin{bmatrix} t_{ud11}(v_k, z) & \cdots & t_{ud1N_y}(v_k, z) \\ \vdots & \ddots & \vdots \\ t_{udN_u1}(v_k, z) & \cdots & t_{udN_uN_y}(v_k, z) \end{bmatrix} \qquad (38)$$

The analysis of the closed-loop CD system properties can be performed in the two-dimensional frequency-domain through $t_{yd}(v_k, z)$ and $t_{ud}(v_k, z)$. As a result, controller tuning can be split into (i) spatial tuning (at $z = 1$) with $Q_3$ and $Q_4$ and (ii) temporal tuning (at $v = 0$) with $\alpha_i$ (where $i = 1, ..., N_y$).

Spatial Tuning for Multiple-Array CD-MPC

In the spatial tuning portion of the multiple-array CD-MPC tuning algorithm, the target is to adjust weights:

$$Q_3 = diag(q_{31}I_{n_1}, ..., q_{3N_u}I_{n_{N_u}} \qquad (39)$$

$$Q_4 = diag(q_{41}S_{b,1}^T S_{b,1}, ..., q_{4N_u}S_{b,N_u}^T S_{b,N_u}) \qquad (40)$$

to achieve robust stability and to reduce the spatial variability of the measurement profiles. The penalty matrices $S_{b,j}$ (where $j = 1, ..., N_u$) are first tuned based on the spatial frequency properties of the process 302, and then a systematic tuning algorithm is used to adjust the scalar weights $q_{3j}$ and $q_{4j}$ (where $j = 1, ..., N_u$).

In conventional multiple-array CD-MPC systems, all $S_{b,j}$ may be fixed to the same constant matrix shown in Equation (25), without taking the specific characteristics of the CD process into consideration. Here, two systematic approaches are described to design the matrices $S_{b,j}$ (where $j = 1, ..., N_u$) so that the spatial spectrum of all actuator profiles can be shaped according to the frequency response of the given CD system. Note that the Discrete Fourier Transform (DFT) is utilized here to obtain the spatial frequency representation of a spatial signal, although other transforms could be used. More specifically, the spatial frequency representation of a signal $y \in C^m$ can be calculated by:

$$\breve{y} = F_m \cdot y \qquad (41)$$

where $F_m$ is the Fourier matrix. Based on this, the following (Lemma 1) can be proved. Given spatial signals $y \in C^m$ and $u \in C^n$ and assuming $N \in C^{m \times n}$ is an RCM, if $y = N \cdot u$, then:

$$\breve{y} = \breve{N} \cdot \breve{u} \qquad (42)$$

where $\breve{N} = F_m N F_n$. It is worth noting that if $N$ is a constant RCM, $\breve{N}$ in Equation (42) indicates the spatial frequency-domain representation of $N$.

In the multiple-array CD-MPC cost function, the $Q_4$ penalty term can be expressed as:

$$U(k)^T Q_4 U(k) = [u_1^T(k), ..., u_{N_u}^T(k)] \cdot \begin{bmatrix} q_{41}S_{b,1}^T S_{b,1} & 0 & 0 \\ 0 & \ddots & 0 \\ 0 & 0 & q_{4N_u}S_{b,N_u}^T S_{b,N_u} \end{bmatrix} \cdot \begin{bmatrix} u_1(k) \\ \vdots \\ u_{N_u}(k) \end{bmatrix}$$

$$= \sum_{j=1}^{N_u}(S_{b,j}u_j(k))^T q_{4j}(S_{b,j}u_j(k)) \qquad (43)$$

Based on this, it can be seen that each $S_{b,j}$ only affects a specific actuator profile $u_j$. Since each $u_j$ may relate to several measurement profiles, it may be desirable that the design of $S_{b,j}$ take the spatial frequency properties of all corresponding subsystems $G_{ij}$ (where $i = 1, ..., N_y$) into consideration. To characterize each of the subsystems $G_{ij}$, assume the maximum

gain of the spatial frequency response of a single-array CD process is $g_{max}$. The cutoff frequency $v_c$ of a process is the spatial frequency at which the following holds:

$$g_{v_c} = r \cdot g_{max}, \quad r \in (0, 0.5] \tag{44}$$

In some embodiments, r = 0.1. It is known that actuation beyond the cutoff frequency can be harmful to a single-array CD process.

Since each subsystem $G_{ij}$ in the plant G can be viewed as a single-array process, it is ideal that the matrices $S_{b,j}$ can penalize the frequency components in $u_j$ that are within the union of the undesired frequency regions of all subsystems $G_{ij}$. In order to achieve this, the matrices $S_{b,j}$ can be designed as a high-pass spatial filter with a passband $v_{b,j}$ equal to:

$$v_{b,j} = \min\left( v_c(G_{1j}), \ldots, v_c\left(G_{N_y j}\right)\right), \quad j = 1, \ldots, N_u \tag{45}$$

where $v_c(G_{ij})$ indicates the cutoff frequency of $G_{ij}$. Based on the results above, such a $S_{b,j}$ can put almost zero weights below $v_{b,j}$ and large weights above $v_{b,j}$ so that actuation beyond the cutoff frequency can be reduced or eliminated through the MPC optimization. In this approach, the weighting matrices $S_{b,j}$ can be identified as follows.

---

**Algorithm 1** Design $S_{b,j}$, j = 1,..., $N_u$ as high pass FIR filters with the stop bands that equal $v_{b,j}$, j = 1,...,$N_u$.

1: Input spatial gain matrices $G_{ij}$, i = 1,...,$N_y$, j = 1,...,$N_u$;
2: **for** j = 1 : $N_u$ **do**
3: Calculate $v_{b,j}$ = min($v_c(G_{ij})...v_c(G_{N_y j})$);
4: Design a low pass filter based on the *sinc* function and the *window* function with the stop band that equals $v_{b,j}$;
5: Conduct the inverse Fourier transform to obtain the filter in the spatial domain;
6: Construct the desired high pass filter $S_{b,j}$ via *spectral inversion* of the filter obtained in line 4;
7: **end for**
8: Output $S_{b,j}$, j = 1,...,$N_u$;

---

Alternatively, the filter length of $S_{b,j}$ is limited by the number of actuators in the $j^{th}$ beam, so a transition band exists in the frequency response of the filter and can be optimized. Given a specific actuator beam, the subsystem with the smallest cutoff frequency is the hardest to control and is referred to as the "worst" subsystem below. Given this, it may be desirable that the spatial frequency response of the designed $S_b$ filter is the mirror of the spatial gains of the worst subsystem. To achieve this, the real valued Fourier matrix $F_n^r \in R^{n \times n}$ can be utilized and defined as:

$$F_n^r(j, k) = \begin{cases} \sqrt{\dfrac{1}{n}} & j = 1 \\ \sqrt{\dfrac{2}{n}} \cdot \sin[(k-1)v_j] & j = 2, \ldots, q \\ \sqrt{\dfrac{2}{n}} \cdot \cos[(k-1)v_j] & j = q+1, \ldots, n \end{cases} \tag{46}$$

where q = (n + 1) / 2 if n is odd and q = n / 2 if n is even. Here, $v_j$ = 2$\pi$ (j - 1) / n is the spatial frequency.

To achieve the desired $S_b$ filters, the mirrored frequency response is calculated (such as by using a numerical method), and the inverse Fourier transform is implemented with the real valued Fourier matrix introduced above. To guarantee that the obtained $S_{b,j}$ matrices have the RCM structure, the mirrored frequency response can satisfy the following property (Lemma 2). Define $k_m(x)$ (where x = 1, ..., $n_j$) as the pre-specified spatial frequency response gain of $S_{b,j}$. If $k_m(x) \in R$, $\forall x$ and $k_m(x) = k_m(n_j - x + 2)$ (where x = 2, ..., ($n_j$ + 1) / 2 if $n_j$ is odd or x = 2, ..., $n_j$ / 2 if $n_j$ is even), the $S_{b,j}$ matrices obtained via the inverse real valued Fourier transform is a symmetric real valued circulant matrix. In this approach, the weighting matrices $S_{b,j}$ can be identified as follows.

---

**Algorithm 2** Design $S_{b,j}$, $j = 1,...,N_u$ based on the mirror of the process spatial spectrum

1: Input spatial gain matrices $G_{i,j}$, $j = 1,...,N_y$, $j = 1,...,N_u$;

2: Input actuator spacings $X_{uj}$, $j = 1,...,N_u$;

3: **for** j = 1 : $N_u$ **do**

4: $v_b = 1/2X_{uj}$;

5: **for** $i$ = 1 : $N_y$ **do**

6: Calculate the cut-off frequency $v_{cij}$ of $G_{ij}$, i.e.. $v_{cij} = v_c(G_{ij})$;

7: **if** $v_{cij} < v_b$ **then**

8: Set $G_b = G_{ij}$ and $v_b = v_{cij}$;

9: **end if**

10: **end for**

11: Obtain the desired mirrored spectrum of $G_b$ by numerical methods;

12: Process the obtained spectrum content based on Lemma 2:

13: Conduct the inverse Fourier transform with (46) to obtain the weighting matrix $S_{b,j}$ in the spatial domain;

14: **end for**

15: Output $S_{b,j}$, $j = 1,...,N_u$;

---

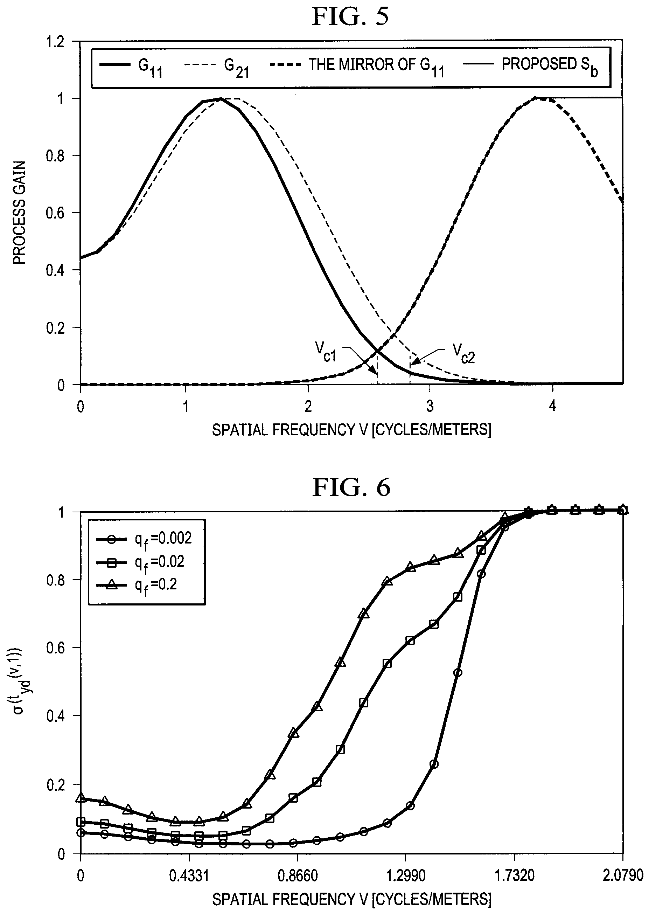

FIGURE 5 illustrates example results obtained when identifying weighting matrices as part of a spatial tuning algorithm according to this disclosure. More specifically, FIGURE 5 illustrates example results obtained using Algorithm 2 for a specific actuator beam. In this case, two measurements are affected by the considered actuator beam. Since the subsystem $G_{11}$ has a smaller cutoff frequency, the frequency response of $S_{b,1}$ is designed as the mirror of $G_{11}$.

Using Algorithms 1 and 2, the weighting matrices $S_{b,j}$ are designed based on the nominal model 304, which works well for cases where there is no model-plant mismatch. For cases with model parameter uncertainties, these algorithms can be modified to develop weighting matrices $S_{b,j}$ that are robust over pre-specified parametric uncertainties. In order to ensure robust performance of the proposed $S_b$ matrices, the passband $v_{b,j}$ can be designed based on the smallest cutoff frequency of all possible corresponding subsystems given the pre-specified parametric uncertainties. Thus, given a specific subsystem $G_{ij}$, denote $v_w$ as the smallest cutoff frequency of all possible perturbed models $G_{ij}^p$ defined in Equation (10). The cutoff frequency $v_c$ of a single-array process changes monotonically with respect to all spatial parameters (such as when $v_c$ increases as $\eta$ decreases), so $v_w$ of $G_{ij}$ can be calculated by:

$$\min_{\eta_{ij}^p, \beta_{ij}^p, \gamma_{ij}^p, \xi_{ij}^p, \varepsilon_{ij}^p} v_c(G_{ij}),$$

$$s.t. \quad \eta_{ij}^p \in \{\underline{\eta}_{ij}, \overline{\eta}_{ij}\}, \quad \beta_{ij}^p \in \left\{\underline{\beta}_{ij}, \overline{\beta}_{ij}\right\},$$

$$\gamma_{ij}^p \in \{\underline{\gamma}_{ij}, \overline{\gamma}_{ij}\}, \quad \xi_{ij}^p \in \left\{\underline{\xi}_{ij}, \overline{\xi}_{ij}\right\},$$

$$\varepsilon_{ij}^p \in \{\underline{\varepsilon}_{ij}, \overline{\varepsilon}_{ij}\},$$

$$i = 1, ..., N_y, \quad j = 1, ..., N_u \tag{47}$$

The weighting matrices $S_{b,j}$ can be designed based on Equation (47) and:

$$v_{b,j} = \min\left(v_w(G_{1j}), ..., v_w(G_{N_yj})\right), \quad j = 1, ..., N_u \tag{48}$$

Note that the obtained $S_b$ matrices consider the worst-case situation that may occur given the pre-specified model parameter uncertainties. They are therefore robust against possible model-plant mismatch that can exist in practice.

Once the spectrum-based matrices $S_{b,j}$ are developed (in whatever manner), automated tuning can be performed to tune the weights $q_{3j}$ and $q_{4j}$ (where $j = 1, ..., N_u$). To perform this automated tuning, a general weight $q_f$ (also referred to as a multiplier) is defined, and the original weights $Q_3$ and $Q_4$ can be expressed as:

$$Q_3 = q_f \cdot diag(r_{31}^t I_{n_1}, \dots, r_{3N_u}^t I_{n_{N_u}}) \qquad (49)$$

$$Q_4 = q_f \cdot diag(r_{41}^t S_{b,1}^T S_{b,1}, \dots, r_{4N_u}^t S_{b,N_u}^T S_{b,N_u}) \qquad (50)$$

Here, $r_{3j}^t$ and $r_{4j}^t$ (where $j = 1, \dots, N_u$) indicate the relative weights for each CD actuator beam, which could be pre-specified by end users. Given the modified weighting matrices $Q_3$ and $Q_4$ in Equations (49) and (50), the tuning objective here is to adjust the scalar weight $g_f$ to ensure robust stability in the spatial domain with $z = 1$.

To aid analysis, steady-state sensitivity functions can be expressed as:

$$T_{yd}(z = 1) = (I_{\sum_{i=1}^{N_y} m_i} + G_0(Q_3 + Q_4)^{-1}G_m^T Q_1)^{-1} \qquad (51)$$

$$T_{ud}(z = 1) = (Q_3 + Q_4 + G_m^T Q_1 G_0)^{-1} G_m^T Q_1 \qquad (52)$$

where:

$$G_0 = \begin{bmatrix} G_{11} & \cdots & G_{1N_u} \\ \vdots & \ddots & \vdots \\ G_{N_y 1} & \cdots & G_{N_y N_u} \end{bmatrix} \qquad (53)$$

$$G_m = \begin{bmatrix} G_{m11} & \cdots & G_{m1N_u} \\ \vdots & \ddots & \vdots \\ G_{mN_y 1} & \cdots & G_{mN_y N_u} \end{bmatrix} \qquad (54)$$

$$G_{mij} = r_{ij}G_{ij}, \quad r_{ij} = \sum_{k=1}^{H_p - T_{d_{ij}}} \sum_{l=1}^{k} a_{ij}^{l-1} \qquad (55)$$

$$i = 1, \dots, N_y, \quad j = 1, \dots, N_u. \qquad (56)$$

Based on the small gain theorem, the robust stability condition at $z = 1$ can be represented as:

$$\bar{\sigma}(T_{ud}(1)\Delta(1)) < 1 \qquad (57)$$

where $\Delta(1)$ is the additive uncertainty at $z = 1$. Given the pre-specified parametric uncertainties, the singular values of $\Delta(1)$ may be difficult to calculate, so an analysis of the uncertainty term can be performed first. Based on the parametric uncertainties in Equations (10)-(17), the uncertain term can be represented as:

$$\Delta(1) = G_p(1) - G(1) = \begin{bmatrix} \Delta_{11}(1) & \cdots & \Delta_{1N_u}(1) \\ \vdots & \ddots & \vdots \\ \Delta_{N_y 1}(1) & \cdots & \Delta_{N_y N_y}(1) \end{bmatrix} \qquad (58)$$

where $\Delta_{ij}(1) = G_{ij}^p(1) - G_{ij}(1)$, $i = 1, \dots, N_y$, and $j = 1, \dots, N_u$. Since parametric uncertainties are employed, $G_p(1)$ is also a block diagonal RCM based on the formula used to create the spatial interaction matrix. Thus, $\Delta_{ij}(1)$ (where $i = 1, \dots, N_y$ and $j = 1, \dots, N_u$) are all RCMs based on the property that RCM is closed on the summation operation. It can therefore be transformed into the two-dimensional frequency-domain with:

$$\{\delta(v_0, 1), \dots, \delta(v_{k_{max}}, 1)\} = Diag(P_y F_y \Delta(1) F_u^H P_u^T) \qquad (59)$$

where $P_y$ and $P_u$ are the unitary permutation matrices and $F_y$ and $F_u$ are block diagonal Fourier matrices as in Equation (34). Also:

$$\delta(v_k, 1) = \begin{bmatrix} \delta_{11}(v_k, 1) & \cdots & \delta_{1N_u}(v_k, 1) \\ \vdots & \ddots & \vdots \\ \delta_{N_y1}(v_k, 1) & \cdots & \delta_{N_yN_u}(v_k, 1) \end{bmatrix} \quad (60)$$

where $\delta_{ij}(v_k, 1)$ is the spatial frequency representation of $\Delta_{ij}(1)$ at spatial frequency $v_k$, $i = 1,..., N_y$, and $j = 1, ..., N_u$.

Since multiplying a matrix with unitary matrices does not change its singular values, the singular values of $\Delta(1)$ can be represented as:

$$h_2 = [\varepsilon(\delta(v_0, 1)), ..., \varepsilon\left(\delta\left(v_{k_{max}}, 1\right)\right)] \quad (61)$$

where $\varepsilon(A) = [\overline{\sigma}(A), ..., \underline{\sigma}(A)]$ denotes the singular values of $A$ arranged from largest to smallest. If the singular values of $\Delta(1)$ obtained by singular value decomposition (SVD) are:

$$h_1 = [\sigma_1\left(\Delta(1)\right), ..., \sigma_{\sum_{j=1}^{N_u} n_j}\left(\Delta(1)\right)] \quad (62)$$

the following relationship holds:

$$h_1 = P \cdot h_2 \quad (63)$$

where P is a permutation matrix. Based on the above analysis, the singular values of $\Delta(1)$ calculated by $h_2$ are sorted according to the spatial frequencies.

On the other hand, it is also possible to perform a two-dimensional frequency transformation on the sensitivity function $T_{ud}(1)$ with:

$$\{t_{ud}(v_0, 1), ..., t_{ud}\left(v_{k_{max}}, 1\right)\} = Diag(P_u F_u T_{ud}(1) F_y^H P_y^T) \quad (64)$$

The robust stability condition in the two-dimensional frequency-domain can then be represented as:

$$\max_k(\overline{\sigma}(t_{ud}(v_k, 1))\,\overline{\sigma}(\delta(v_k, 1))) < 1 \quad (65)$$

where $k = 0, ..., k_{max}$. Note that the robust stability condition constructed based on the two-dimensional frequency approach may be less conservative than the traditional one because it allows a larger peak of $\overline{\sigma}(t_{ud}(v_k, 1))$ and $\sigma(\delta(v_k, 1))$ does not occur at the same spatial frequency.

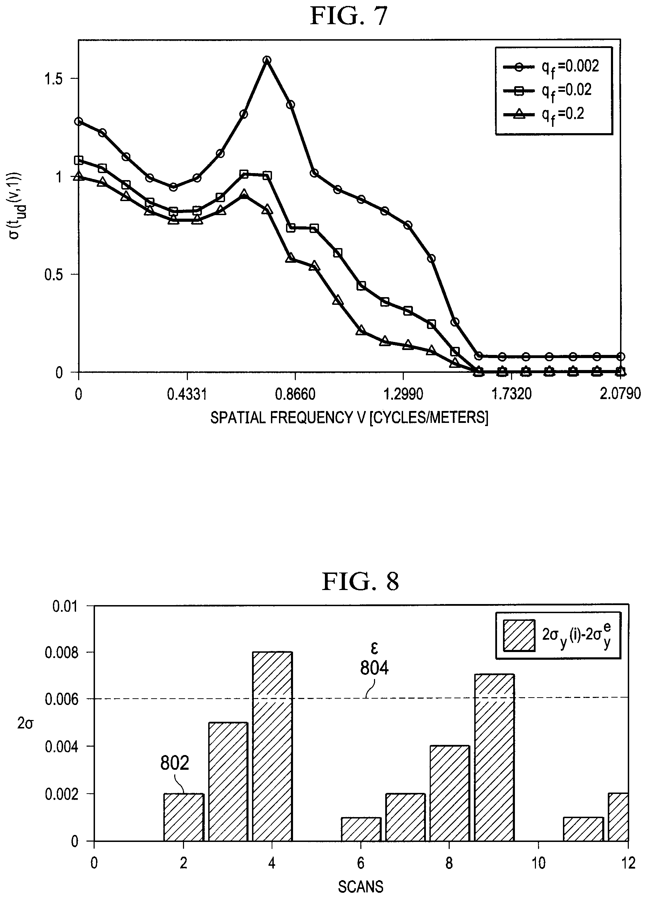

To utilize the condition in Equation (65), the relationship between the tuning parameter (general weight $q_f$) and the sensitivity functions can be analyzed to provide some tuning guidelines. FIGURES 6 and 7 illustrate example effects of changing the general weight $q_f$ on sensitivity functions during spatial tuning according to this disclosure. It can be seen in FIGURES 6 and 7 that a greater $q_f$ gives better robustness while a smaller $q_f$ provides better performance. Therefore, $q_f$ can be tuned according to this relationship given $\overline{\sigma}(\delta(v_j, 1))$, where $j = 1, ..., k_{max}$. In order to calculate $\overline{\sigma}(\delta(v_j, 1))$ given the parametric uncertainties, the following optimization problem can be solved:

$$\max_{\eta_{ij}^p, \beta_{ij}^p, \gamma_{ij}^p, \xi_{ij}^p, \varepsilon_{ij}^p} \overline{\sigma}(\delta(v_k, 1)), for\ k = 1, \dots, k_{max},$$

$$s.t.\ \ \eta_{ij}^p \in \{\underline{\eta}_{ij}, \overline{\eta}_{ij}\}, \ \ \beta_{ij}^p \in \left\{\underline{\beta}_{ij}, \overline{\beta}_{ij}\right\},$$

$$\gamma_{ij}^p \in \{\underline{\gamma}_{ij}, \overline{\gamma}_{ij}\}, \ \ \xi_{ij}^p \in \left\{\underline{\xi}_{ij}, \overline{\xi}_{ij}\right\},$$

$$\varepsilon_{ij}^p \in \{\underline{\varepsilon}_{ij}, \overline{\varepsilon}_{ij}\},$$

$$i = 1, \dots, N_y, \ \ j = 1, \dots, N_u \tag{66}$$

Since the spatial gain matrices $G_{ij}(1)$ and $G_{ij}^p(1)$ can be generated in a highly nonlinear way, it may be very difficult to obtain the analytical expression of $\overline{\sigma}(\delta(v_k, 1))$. However, it has been shown that the maximum singular value of the uncertainty term for a single-array system can be calculated based on only the extreme case system parameters. Since each subsystem of a multiple-array system has the same structure as that of systems previously considered, the problem in Equation (66) can be solved by only considering the boundaries of its constraints. Unfortunately, this approach could be too computationally expensive to employ in some cases since the number of extreme cases to be considered increases exponentially with respect to system dimensions and can be very large even for a small-dimensional system ($2^5$ extreme cases for a 1-by-1 process or $2^{5\times6}$ extreme cases for a 2-by-3 process).

To overcome this issue, define the spatial parameters of a multiple-array CD process in matrix format as follows:

$$b = \begin{bmatrix} b_{11} & \cdots & b_{1N_u} \\ \vdots & \ddots & \vdots \\ b_{N_y1} & \cdots & b_{N_yN_u} \end{bmatrix} \tag{67}$$

where $b$ represents $\eta, \beta, \gamma, \xi$, or $\varepsilon$. Therefore, similar to characterizing a group of uncertain systems with a polytopic system described by a number of vertex systems, the maximum singular values of $\Delta(1)$ given the parametric uncertainty can be calculated approximately based on:

$$\underline{b} = \begin{bmatrix} \underline{b}_{11} & \cdots & \underline{b}_{1N_u} \\ \vdots & \ddots & \vdots \\ \underline{b}_{N_y1} & \cdots & \underline{b}_{N_yN_u} \end{bmatrix}, \ \overline{b} = \begin{bmatrix} \overline{b}_{11} & \cdots & \overline{b}_{1N_u} \\ \vdots & \ddots & \vdots \\ \overline{b}_{N_y1} & \cdots & \overline{b}_{N_yN_u} \end{bmatrix} \tag{68}$$

Then, the optimization problem in Equation (66) can be solved by:

$$\max_{\eta, \beta, \gamma, \xi, \varepsilon} \overline{\sigma}(\delta(v_k, 1)), for\ k = 1, \dots, k_{max},$$

$$s.t.\ \ \eta \in \{\underline{\eta}, \overline{\eta}\}, \ \ \beta \in \left\{\underline{\beta}, \overline{\beta}\right\},$$

$$\gamma \in \{\underline{\gamma}, \overline{\gamma}\}, \ \ \xi \in \left\{\underline{\xi}, \overline{\xi}\right\}, \ \ \varepsilon \in \{\underline{\varepsilon}, \overline{\varepsilon}\} \tag{69}$$

Note that in the optimization problem of Equation (69), the number of extreme case systems considered is the same as that of the single-array case, which simplifies the problem at hand.

Although the optimality of the approximation in Equation (69) cannot be rigorously proved, it is intuitive in that the maximum singular values $\overline{\sigma}(\delta(v_k, 1))$ at each spatial frequency normally occur when the spatial model parameters reach their extreme uncertain values simultaneously. This is because the largest difference between $G_p$ and G is achieved at this time. The theoretic support behind the aforementioned analysis is that the robust performance of a group of perturbed systems represented as a polytopic system can be characterized by the vertex systems and can particularly be captured via only the set of the extreme-case vertex systems to reduce the computation cost. According to the proposed tuning guideline of $q_f$ as well as the bound of $\overline{\sigma}(\delta(v_k, 1))$ (where $k = 1, \dots, k_{max}$) based on the model uncertainty, a bisection search method or other search method can be utilized to find the smallest $q_f$ to guarantee the condition in Equation (65). This can be accomplished quickly with conventional computing devices.

Note that Equation (14) above defines alignment uncertainty as $c_{kij}^p = c_{kij} + \varepsilon_{ij}$, where $\varepsilon_{ij} \in [\underline{\varepsilon_{ij}}, \overline{\varepsilon_{ij}}]$ is a global uncertainty on all alignment parameters of $G_{ij}^p$. Such a global perturbation corresponds to the so-called "wandering" behavior in which an entire web travels towards one side of a machine. In the paper-making process or other processes, there is another type of misalignment called "shrinkage" in which the sides of a web shrink (such as when water is removed from a paper sheet). This type of alignment uncertainty can be represented as:

$$c_{kij}^p = c_{kij} + s_{kij} \tag{70}$$

where $s_{kij}$ is the shrinkage for the $k^{th}$ alignment. Denote $s_{ij} = [s_{1ij}, ..., s_{n_{jij}}]$ as the shrinkage profile. In some embodiments, the $s_{ij}$ values can be specified by low shrinkage width, low shrinkage, high shrinkage, and high shrinkage width. It has been observed that the worst situation happens when the largest shrinkage is reached at both sides (denoted as $s_{ij}^b$) or only at one side (denoted as $s_{ij}^o$). The proposed spatial tuning approaches above can be modified to add constraints $s_{ij} \in \{s_{ij}^b, s_{ij}^o\}$ to the optimization problems in Equation (47) and (66) when users believe that nonlinear shrinkage will be significant.

Temporal Tuning for Multiple-Array CD-MPC

In the temporal tuning portion of the multiple-array CD-MPC tuning algorithm, the objective is to determine the parameters $\alpha_i$ (where i = 1, ..., $N_y$) (also denoted as $\alpha \triangleq [\alpha_1, ..., \alpha_{N_y}]$ below) in the temporal filter(s) 308 such that robust stability and user-specified temporal performance can be achieved. The robust stability condition at v = 0 can be obtained similar to that in the spatial tuning portion of the algorithm and is denoted as:

$$\overline{\sigma}(t_{ud}(0, e^{i\omega}))\overline{\sigma}(\delta(0, e^{i\omega})) < 1, \ \forall \omega \tag{71}$$

where $t_{ud}(0, e^{i\omega}) \in C^{N_u \times N_y}$ and $\delta(0, e^{i\omega}) \in C^{N_y \times N_u}$ are $T_{ud}(z)$ and $\Delta(z)$ at spatial frequency v = 0.

Since extreme closed-loop system behavior normally occurs at the extreme model parameters, the maximum of $\overline{\sigma}(\delta(0, e^{i\omega}))$ can be calculated by solving:

$$\max_{a^p, T_d^p} \overline{\sigma}(\delta(0, e^{i\omega})), \ \ \forall \omega,$$

$$s.t. \ a^p \in \{\overline{a}, \underline{a}\}, \ T_d^p \in \{\overline{T}_d, \underline{T}_d\} \tag{72}$$

Here, $a^p$ and $T_d^p$ represent the temporal parameter matrices that include $a_{ij}^p$ and $T_{d_{ij}}^p$ (where $i = 1, ..., N_y$ and j = 1, ..., $N_u$) in the same manner as in Equation (67). Also, $\{\overline{a}, \underline{a}\}$ and $\{\overline{T}_d, \underline{T}_d\}$ indicate that all elements in $a^p$ and $T_d^p$ take their maximum and minimum values in the uncertain regions simultaneously, similar to Equation (68).

For robust stability analysis, a general weight $\alpha^b$ can be adopted such that $\alpha^1 = ... = \alpha^{N_y} = \alpha^b$, and a search can be conducted to identify the smallest $\alpha^b$ that satisfies Equation (71). This can be achieved efficiently, such as by using a bisection search, since increasing values of $\alpha^b$ lead to decreasing values of $\overline{\sigma}(t_{ud}(0, e^{i\omega}))$. The obtained value of $\alpha^b$ can serve as the lower bound for $\alpha_i$ (where $i = 1, ..., N_y$) in the temporal tuning and is denoted $\alpha^*$ below.

After robust stability is achieved, the objective of the temporal tuning is to adjust $\alpha_i$ (where $i = 1, ..., N_y$) for user-specified temporal performance. Considering the requirements of the end users in pulp and paper industry as an example, the overshoot and settling time of the $2\sigma$ (two times the standard deviation) spread of an input/output profile could be utilized as performance indices. Detailed definitions of the $2\sigma$ indices are as follows. The "overshoot of the $2\sigma$ spread" refers to the overshoot of a stable $2\sigma$ spread and is defined as its maximum value minus its final value divided by the final value. The "settling time of the $2\sigma$ spread" refers to the settling time of a stable $2\sigma$ spread and is defined as the time required for the spread to reach and stay at its final value.

Since the uncertainties considered on the parameters $a$ and $T_d$ end up with a set of perturbed systems, it may be necessary or desirable to develop a visualization technique to characterize all possible $2\sigma$ spreads for all input/output profiles. A visualization technique can be used to achieve the $2\sigma$ spread envelope for a set of single-array CD processes with parametric uncertainty:

$$a^p \in [\underline{a}, \overline{a}], \ T_d^p \in [\underline{T_d}, \overline{T_d}] \tag{73}$$

via four extreme case systems:

$$a^p \in \{\underline{a}, \overline{a}\}, \ T_d^p \in \{\underline{T_d}, \overline{T_d}\} \tag{74}$$

The temporal transfer function of each subsystem of $G(z)$ has the same structure as that of a single-array system, and the extreme closed-loop system behavior happens when all extreme parameters are reached simultaneously. Thus, the above method can be extended by only considering $a^p \in \{\underline{a}, \overline{a}\}$, $T_d^p \in \{\underline{T_d}, \overline{T_d}\}$ to characterize the $2\sigma$ envelope responses. Algorithm 3 below represents an example of how to achieve this robust visualization in order to calculate the $2\sigma$ spreads.

---

**Algorithm 3** Calculation of the $2\sigma$ spread envelopes

1: Input the uncertainty level $[\underline{\alpha}, \overline{\alpha}]$ and $[\underline{T_d}, \overline{T_d}]$ and parameter $\alpha$;

2: Determine the four worst-case uncertain systems based on extreme combinations of the uncertainty intervals ($a^p \in \{\underline{a}, \overline{a}\}$, $T_d^p \in \{\underline{T_d}, \overline{T_d}\}$, and then calculate the measurement $2\sigma$ spreads $Y_h = [y_1^{2\sigma}, \dots, y_{N_y}^{2\sigma}]_h^T$ for the $h$th extreme system ($h$ = 1, 2, 3, 4) based on the constrained CD-MPC in (18).

3: Calculate the upper envelope for all the measurement $2\sigma$ spreads { $\overline{y}_i^{2\sigma}, \dots, \overline{y}_{N_y}^{2\sigma}$ } by $\max_{h \in \{1,2,3,4\}} Y_h(k,:\, )$, for $k$ = 1,...,$N_y$;

4: Calculate the lower envelope for all the measurement $2\sigma$ spreads { $\underline{y}_i^{2\sigma}, \dots, \underline{y}_{N_y}^{2\sigma}$ } by $\min_{h \in \{1,2,3,4\}} Y_h(k,:\, )$. for $k$ = 1,...,$N_y$;

---

Note that while Algorithm 3 only shows the calculation for measurement $2\sigma$ envelopes, it can also be utilized directly to obtain the envelopes of the $2\sigma$ spreads for actuator profiles. The performance of Algorithm 3 can be verified, such as by using the extensive simulation-based method on different types of CD processes.

Based on this, the objective of the temporal tuning can be formulated as follows:

$$\min_{\alpha} ||T_s \left( y_1^{2\sigma}, \dots, y_{N_y}^{2\sigma} \right) ||_\infty$$
$$s.t. \ OS(u_j^{2\sigma}) \leq OS^*, \ j = 1, \dots, N_u \tag{75}$$

Here, $T_s \left( y_1^{2\sigma}, \dots, y_{N_y}^{2\sigma} \right) = [T_s(y_1^{2\sigma}), \dots, T_s \left( y_{N_y}^{2\sigma} \right)]$ and $T_s(y_i^{2\sigma})$ (where $i$ = 1, ..., $N_y$) is the worst-case (longest) $2\sigma$ spread settling time of output $y_i$. Also, $OS(u_j^{2\sigma})$ (where $j$ = 1, ..., $N_u$) denotes the worst-case (largest) $2\sigma$ spread overshoot of input $u_j$, and $OS^*$ denotes the requirement on the worst-case overshoot. In the above tuning objective, users can specify the maximum allowable overshoot on the input $2\sigma$s, and the optimization problem in Equation (75) can be solved, yielding the $\alpha$ that provides the smallest worst-case $2\sigma$ settling time for each output. In some embodiments, to solve the optimization problem in Equation (75) efficiently, the problem at hand can be split into two steps: (i) tuning in the frequency-domain and (ii) tuning in the time-domain.

In the frequency-domain tuning, the parameter vector $\alpha = [\alpha_1, \dots, \alpha_{Ny}]$ is adjusted based on the sensitivity analysis. Considering the two-dimensional frequency property of the system, a modified sensitivity function $t_{yd}^f(0, z)$ can be defined based on $t_{yd}(0, z)$ in Equation (37) as follows:

$$t^f_{yd}(0, z) = \begin{bmatrix} ||t_{yd}(0,z)|_{1st\ row}||_2 \\ \vdots \\ |\,|t_{yd}(0,z)|_{N^{th}_y\ row}|\,|_2 \end{bmatrix} \qquad (76)$$

in which all channels for each output have been summed with the 2-norm. To achieve the desired performance, upper limits on the channels of the combined sensitivity function can be selected, and the tuning parameters can be adjusted to satisfy the requirements. Define $\kappa_i$ as the upper limit for $t^f_{yd}(0, z)$, and the objective becomes tuning $\alpha$ such that:

$$t^f_{yd,i}(0, z) < \kappa_i, \quad \forall i \qquad (77)$$

Given the structure of the CD-MPC system, as $f_{\alpha i}$ (characterized by $\alpha_i$) is only utilized to smooth the reference trajectory for the $i^{th}$ output profile, it is intuitive to assume that the response of the $i^{th}$ output is dominated by $\alpha_i$. Moreover, the dynamic parameters of $f_{\alpha i}$ are designed based on the dominant subsystem of the $i^{th}$ output profile, which further ensures the dominant property of $\alpha_i$. This property can also be verified, such as with the extensive simulation-based method. Therefore, the frequency-domain tuning portion can be achieved by solving:

$$\alpha^f_i = \max_{k=0,\ldots,k_{max}} \left( \alpha^m_{i,\omega_k} \right), \text{for } i = 1,\ldots, N_y$$

$$\alpha^m_{i,\omega_k} = \min(\alpha_{i,\omega_k})$$

$$s.t. \ \alpha_{i,\omega_k} > \alpha^*, \ t^f_{yd,i}\left(0, e^{i\omega_k}\right) < \kappa_i \qquad (78)$$

where $\omega_k$ (where $k = 0, ..., k_{max}$) are the temporal frequency points located from 0 to the Nyquist frequency. It is known that $\kappa_i$ (where $i = 1, ..., N_y$) can be selected based on the $OS^*$ and the model parameters of the dominant subsystem for the $i^{th}$ output and, in some embodiments, is normally between $k_l = 1.2$ and $k_u = 1.8$ from industrial experience. Note that the tuning in the frequency-domain may result in a value of $\alpha$ that is not able to guarantee the specification $OS^*$ for all channels. Thus, the tuning in the time-domain is performed to fine tune $\alpha$.

In the time-domain tuning, the parameter vector a is fine-tuned to find the optimal $\alpha$ (denoted as $\alpha^t$) that provides the smallest $2\sigma$ settling time for each output profile while still satisfying the requirement on overshoot $OS$. Based on the analysis above, the $i^{th}$ output profile is dominated by $\alpha_i$, so $\alpha_i$ can be utilized to minimize $T_s(y^{2\sigma}_i)$ under the constraints on the $2\sigma$ overshoot. Since $T_s(y^{2\sigma}_i)$ is approximately a unimodel function of $\alpha_i$, a golden search or other search can be utilized to find the $\alpha^t_i$ based on a closed-loop simulation with the following procedure. If the maximum overshoot (OS) with $\alpha^f$ is larger than the specification, the search is implemented in the region $\alpha_i \in [\alpha^f_i, \alpha_{u,i}]$, where $\alpha_{u,i}$ is the upper bound for $\alpha_i$ obtained by solving Equation (78) with $\kappa_i = 1.2$ and $\alpha^f_i$ is obtained in the frequency tuning. Otherwise, the search can be implemented in the region $\alpha_i \in [\alpha_{l,i}, \alpha^f_i]$, where $\alpha_{l,i}$ is the lower bound for $\alpha_i$ obtained by solving Equation (78) with $\kappa_i = 1.8$.

Algorithm 4 below represents an example of how to perform the temporal tuning portion of the CD-MPC tuning algorithm, including both the frequency-domain tuning and the spatial-domain tuning.

---

**Algorithm 4** Temporal tuning

---

1: Input OS* and parametric uncertainties on $\alpha_{ij}$ and $T_{d_{ij}}$, $i = 1,...,N_y$, $j = 1,...,N_u$;
2: Calculate the lower bound for robust stability $\alpha^*$ based on (71);
3: Input dynamic Nyquist frequency $\omega_N$;
4: For each tuning parameter $\alpha_i$, solve

$$s.t. \ t^f_{yd,i}\left(0, e^{i\omega_k}\right) < \kappa_i > \alpha^*,$$

(continued)

| **Algorithm 4** Temporal tuning |
| --- |
| Obtain a feasible range for the parameter $\alpha_i$ by settling $\kappa_i = k_l$, and $\kappa_i = k_u$, namely, $\alpha_i \in [\alpha_{i,l}, \alpha_{i,u}]$. |
| 5: **if OS**$(\alpha^f) >$ OS* **then** |
| 6: For each tuning parameter $\alpha_i$. search in $[\ \alpha_i^{f}\ , \alpha_{i,u}]$ for $\alpha_i^{t}$ ; |
| 7: **else** |
| 8: For each tuning parameter $\alpha_i$, search in $[\alpha_{i,l},\ \alpha_i^{f}\ ]$ for $\alpha_i^{t}$ ; |
| 9: **end if** |
| 10: Output $\alpha^f$. |
| 11: **end** |

In order to speed up Algorithm 4, the time-domain tuning in lines 5-10 can be implemented based on a counter-line search method, such as that proposed in He et al., "Automated two-degree-of-freedom model predictive control tuning," Industrial & Engineering Chemistry Research, vol. 54, no. 43, October 2015, pp. 10811-10824. More specifically, the search for $\alpha_i$ can end once the $2\sigma$ overshoot of the dominant subsystem equals *OS\**.

Note that in the time-domain tuning portion described above, the $2\sigma$ indices are calculated based on $2\sigma$ spreads obtained with a constrained CD-MPC. This may require a lot of computational time because a constrained QP is solved repeatedly. The following describes a computationally efficient approach to obtain the $2\sigma$ spreads such that the tuning time can be significantly reduced.

In order to calculate the $2\sigma$ spreads, the constrained QP of CD-MPC needs to be solved at every sampling instant to simulate the output and input profiles. If the QP is solved at selective sampling instants (rather than every sampling instant) while still providing similar $2\sigma$ spreads, the computational efficiency can be improved. The so-called "event-based" sampling/control strategy is a promising solution for this issue. Different from traditional control strategy in which a control input is updated at every sampling instant, event-based control only triggers a control update when a pre-specified condition is no longer satisfied. According to existing results for event-based control, an almost identical control performance can be achieved with a significantly-reduced sampling/control update rate.

Based on this idea, the following condition can be specified to determine the control input update:

$$\left|\left|2\sigma_y(i) - 2\sigma_y^e\right|\right|_\infty < \varepsilon, \ \forall i > 1 \qquad (79)$$

where $2\sigma_y(i) \in R^{N_y \times l}$ is the measurement $2\sigma$ vector at the $i^{th}$ time instant and $\sigma_y^e$ is the measurement $2\sigma$ at the most recent time instant at which the QP is solved. This condition indicates that when the difference between the current measurement $2\sigma$ and the measurement $2\sigma$ at the most recent triggering instant is larger than a threshold, the QP is solved to update the control input. Otherwise, the control input is not changed, and the same input is applied to the system. Note that the threshold $\varepsilon$ can be selected in various ways, such as based on a user's experience or on initial and approximated steady-state measurement $2\sigma$s. FIGURE 8 illustrates example results obtained using event-based control as part of a temporal tuning algorithm according to this disclosure. In FIGURE 8, bars 802 indicate the values of

$\left|\left|2\sigma_y(i) - 2\sigma_y^e\right|\right|_\infty$ , and a line 804 represents the threshold $\varepsilon$. It can be observed that when a bar 802 rises above the line 804, the MPC is triggered to update the input so that $\left|\left|2\sigma_y(i) - 2\sigma_y^e\right|\right|_\infty = 0$ at the next time instant.

Algorithm 5 below represents an example of how to perform this event-based processing.

| **Algorithm 5** Event-triggered simulation of the CD-MPC |
| --- |
| 1: Input the model parameters and controller parameters; |
| 2: **SolveQP** $\leftarrow$ 1; |
| 3: **DeadTime** $\leftarrow ceil\left(\frac{\max\{\max(T_d)\}}{\Delta T}\right)$ ; |
| 4: Input $\varepsilon$; |

(continued)

| **Algorithm 5** Event-triggered simulation of the CD-MPC |
| --- |
| 5: **for** i=1:loopnumber **do** |
| 6:      **if SolveQP==1 then:** |
| 7:           Call **mpcMultiplantcontroller** for **dU**; |
| 8:      **else** |
| 9:        **dU = 0**; |
| 10:      **end if** |
| 11:      Update the input profile **U** based on the **dU**. |
| 12:      Update the output profile based on the input profile; |
| 13:      **if SolveQP==1 then**; |
| 14:  $2\sigma_y^e = 2\sigma_y(i)$ : |
| 15:      **end if** |
| 16:      if **i>DeadTime then:** |
| 17:        if $\max(2\sigma_y(i) - 2\sigma_y^e) > \varepsilon$ then: |
| 18:          **SolveQP** ← 1; |
| 19:        **else** |
| 20:          **SolveQP** ← 0; |
| 21:        **end if** |
| 22:      **end if** |
| 23: **end for** |
| 24: Output the input and output profiles; |
| 25: End of the algorithm. |

The above description has described an automated robust tuning algorithm for multiple-array CD model-based control with user-specified parametric uncertainties. Based on the RCM property of the CD processes, the system model can be represented in the two-dimensional frequency-domain. As a result, the tuning algorithm can be divided into two separated portions: (i) spatial tuning and (ii) temporal tuning. In the spatial tuning, the weighting matrices $S_{b,j}$ (where j = 1, ..., $N_u$) are designed to shape the spatial spectrum of each actuator profile based on the frequency property of the system, and an automated tuning algorithm is used to adjust the weights based on the amount of the parametric uncertainties. In the temporal tuning, a systematic algorithm is used to tune the parameter $\alpha$ for the user-specified time-domain performance requirement under the parametric uncertainties.

Although FIGURES 3 through 8 illustrate example details related to the CD-MPC tuning algorithm described above, various changes may be made to FIGURES 3 through 8. For example, industrial systems could have representations different from those shown in FIGURES 3 and 4. Also, the contents of the graphs in FIGURES 5 through 8 are illustrative only.

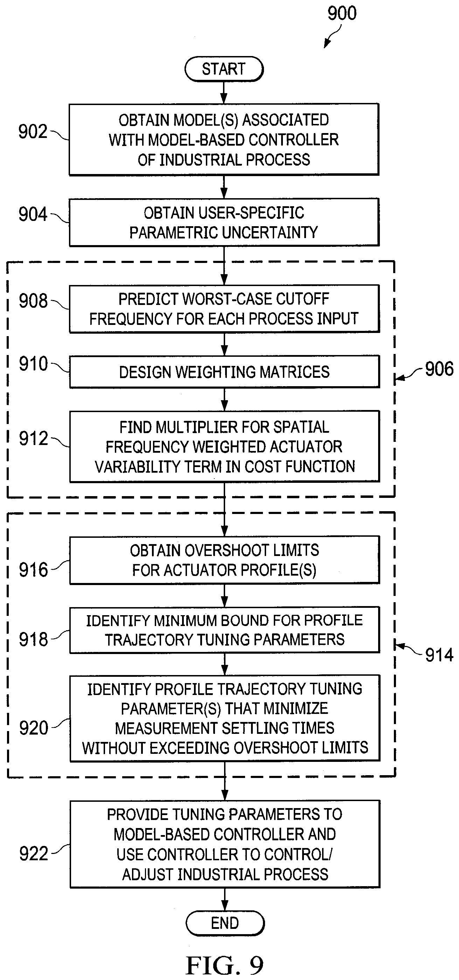

FIGURE 9 illustrates an example method 900 for tuning the operation of a model-based controller according to this disclosure. For ease of explanation, the method 900 is described as being performed using the device 200 of FIGURE 2 for the controller 104 in the system 100 of FIGURE 1. However, the method 900 could be used with any other suitable device, controller, or system.

As shown in FIGURE 9, at least one model associated with a model-based controller in an industrial process is obtained as step 902. This could include, for example, the processor 202 of the device 200 obtaining the process model(s) from a user, a memory, or other source or generating the process model(s). The industrial process here has multiple actuators. Each model could be represented in a two-dimensional frequency-domain. Each model could be associated with an MPC controller, such as the controller 104 in the system 100. The industrial process could represent a web manufacturing or processing system, such as the paper machine 102 in the system 100. At least one user-specific parametric uncertainty is obtained at step 904. This could include, for example, the processor 202 of the device 200 receiving input from a user defining the parametric uncertainty. The parametric uncertainty can relate to one or more spatial and/or temporal parameters of the model(s).

Spatial tuning for the controller is performed at step 906. This could include, for example, the processor 202 of the device 200 analyzing data in order to identify weighting matrices for the controller 104. The weighting matrices are used by the controller 104 to suppress one or more frequency components in actuator profiles of the actuators in the industrial process. The weighting matrices are also used to shape a spatial spectrum of each actuator profile.

In the example shown in FIGURE 9, the spatial tuning includes predicting the worst-case cutoff frequency for each process input based on the model(s) and the parametric uncertainty at step 908. This could include, for example, the processor 202 of the device 200 predicting the worst-case cutoff frequencies as described above. Weighting matrices are designed based on the worst-case cutoff frequencies at step 910. This could include, for example, the processor 202 of the device 200 designing the weighting matrices $S_{b,j}$ as high-pass spatial filters, where each filter has a passband $v_{b,j}$ equal to or based on one of the worst-case cutoff frequencies. The weighting matrices $S_{b,j}$ can be designed to penalize high-frequency actuator variability. A general weight (or multiplier) is identified to guarantee robust spatial stability at step 912. This could include, for example, the processor 202 of the device 200 tuning the general weight $q_f$ as described above. The general weight $q_f$ can be used to calculate one or more tuning parameters (such as $Q_3$ and $Q_4$), and at least one of these tuning parameters (such as $Q_4$) can be calculated using the weighting matrices. The tuning parameters can be tuned in this matter to reduce the spatial variability of measurement profiles in the industrial process. The measurement profiles could identify characteristics of a web 108 being manufactured or processed.

Temporal tuning for the controller is performed at step 914. This could include, for example, the processor 202 of the device 200 analyzing data in order to identify one or more parameters of a multivariable filter, such as the temporal filter 308. The filter is used to smooth at least one reference trajectory of at least one actuator profile of the actuators. This is done in order to achieve a user-specified temporal performance while operating under the parametric uncertainty provided by the user.

In the example shown in FIGURE 9, the temporal tuning includes obtaining overshoot limits for one or more actuator profiles at step 916. This could include, for example, the processor 202 of the device 200 identifying $2\sigma$ overshoot limits based on spread envelopes as described above. One or more minimum bounds are identified for one or more profile trajectory tuning parameters at step 918. This could include, for example, the processor 202 of the device 200 identifying the lower bound $\alpha^b$ for parameters $\alpha_i$ (where $i = 1, ..., N_y$), where the parameters $\alpha_i$ represent temporal filter parameters. One or more profile trajectory tuning parameters that minimize measurement settling times without exceeding overshoot limits are identified at step 920. This could include, for example, the processor 202 of the device 200 performing frequency-domain tuning and time-domain tuning. The frequency-domain tuning can involve identifying $\alpha_i$ values that satisfy the lower bound $\alpha^b$, while the time-domain tuning can involve fine-tuning the $\alpha_i$ values to identify the optimal $\alpha$ that provides the smallest $2\sigma$ settling time for each output profile while still satisfying the requirement on the overshoot.

The tuning parameters are provided to the model-based controller so that the controller is able to use the tuning parameters to control or adjust the industrial process at step 922. This could include, for example, the processor 202 of the device 200 outputting the $Q_3$, $Q_4$, and $\alpha_i$ tuning parameters to the controller 104. The controller 104 is able to use these tuning parameters during its execution of control logic when controlling one or more actuators or actuator arrays in the industrial process (the paper machine 102). Thus, modification of the tuning parameters helps to increase or maximize the effectiveness of the controller 104 in controlling the industrial process. As a result, one or more physical characteristics of the web 108 can be more effectively controlled in order to increase the quality of the web 108.

Although FIGURE 9 illustrates one example of a method 900 for tuning the operation of a model-based controller, various changes may be made to FIGURE 9. For example, while shown as a series of steps, various steps in FIGURE 9 could overlap, occur in parallel, occur in a different order, or occur any number of times. Also, various steps in FIGURE 9 could be omitted, such as when only spatial tuning or only temporal tuning of a model-based controller is needed or desired.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Other changes, substitutions, and alterations are also possible without departing scope of this disclosure, as defined by the following claims.

## Claims

1. A method for robust tuning of multiple actuator arrays cross-direction model predictive control (CD-MPC) for paper-making processes with model uncertainties, the method comprising:

obtaining (902) one or more models (304) associated with a model-based controller (104, 306) in an industrial process (100, 302) having multiple actuator arrays (114, 116,118, 120);
whereby the model-based controller (306) solves the optimal control problem defined as:

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) + \sum_{i=0}^{H_u-1} \left[ \Delta U(k+i)^T Q_2 \Delta U(k+i) + \left( U(k+i) - U_{sp}(k+i) \right)^T Q_3 \left( U(k+i) - U_{sp}(k+i) \right) + U(k+i)^T Q_4 U(k+i) \right] \right\}$$

which is subject to system dynamics and the following constraint:

$$\Omega \Delta U(k) \leq b - \Gamma U(k-1)$$

where

$$\Delta U(k) = U(k) - U(k-1)$$

and where the actuator profile U denotes the outputs of the controller (306) that are provided to the actuators,

$\hat{Y} \in R^{\sum_{i=1}^{N_y} m_i}$ represents the output prediction, $Y_{sp} \in R^{\sum_{i=1}^{N_y} m_i}$ are the Z set points for the controlled properties, and Hp is the prediction horizon,

$Q_1 \in R^{\sum_{i=1}^{N_y} m_i \times \sum_{i=1}^{N_y} m_i}$ is the diagonal penalty matrix for controlled variables,

$Q_2 \in R^{\sum_{j=1}^{N_u} n_j \times \sum_{j=1}^{N_u} n_j}$ is the diagonal penalty matrix for changes in manipulated variables and

$$Q_3 \in R^{\sum_{j=1}^{N_u} n_j \times \sum_{j=1}^{N_u} n_j}$$ is the penalty matrix for differences between the manipulated variables and their references $\Omega$, $\Gamma$ and b are constraint matrices or vectors determined based on physical limitations of the actual process (302),

and

obtaining (904) a user-specific parametric uncertainty;

performing (906) a spatial tuning of the model-based controller, wherein the spatial tuning includes:

predicting (908) a worst-case cutoff frequency for each process input based on the one or more models and the user-specific parametric uncertainty;

designing (910) CD-MPC weighting matrices (S$bj$) based on the one or more models and the worst-case cutoff frequency wherein the CD-MPC weighting matrices $Sbj$ suppress one or more frequency components in each actuator profile of the multiple actuator arrays, wherein the CD-MPC weighting matrices include scalar weights, wherein one of the CD-MPC weighting matrices Q4 is associated with bending and/or picketing of the actuator arrays, and is calculated based on a bending moment matrix with dimension for each of the multiple actuator profiles

$$Q_4 = diag(q_{41}S_{b,1}^T S_{b,1}, q_{42}S_{b,2}^T S_{b,2}, \dots, q_{4N_u}S_{b,N_u}^T S_{b,N_u}) \tag{24}$$

where:

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

where, $q_{4j}$ (where j = 1, ..., $N_u$) are scalar weights, where Sb,j is the bending moment matrix that incorporates a first and a second-order derivatives for each of the multiple actuator profiles to penalize a bending behavior in a cost function of the model-based controller wherein the CD-MPC weighting matrices $(Sbj)$ are designed as high-pass spatial filters, where each filter has a passband equal to or based on one of the worst-case cutoff frequencies.

2. The method of Claim 1, further comprising:
performing (914) temporal tuning of the model-based controller.

3. The method of Claim 1, wherein each of the one or more models is represented in a two-dimensional frequency domain.

4. The method of Claim 1, wherein the spatial tuning comprises using the weighting matrices to shape a spatial spectrum of each of the actuator profiles.

5. The method of Claim 1, wherein the spatial tuning further comprises adjusting the weighting matrices based on the user-specific parametric uncertainty.

6. The method of Claim 1, wherein the spatial tuning further comprises:

for each process input, finding (908) the worst-case cutoff frequency overall output channels considering the one or more models, given the parametric uncertainty;
based on the one or more models and the worst-case cutoff frequencies, designing (910) the weighting matrices to penalize higher-frequency actuator variability; and
finding (912) a multiplier for a spatial frequency weighted actuator variability term in a cost function that guarantees robust spatial stability.

7. The method of Claim 1, wherein the spatial tuning further comprises:
providing (922) one or more terms of the cost function to the model-based controller, the model-based controller configured to use the cost function during control of the industrial process such that a change to the one or more terms of the cost function alters operation of the model-based controller and the industrial process, at least one of the one or more terms based on the weighting matrices.

8. An apparatus comprising:

at least one memory (204, 210, 212) configured to store one or more models (304) associated with a model-based controller (104, 306) in an industrial process (100, 302) having multiple actuator arrays (114, 116, 118, 120); and
at least one processing device (202) configured to obtain (904) a user-specific parametric uncertainty;
at least the one processing device (202) configured to perform spatial tuning of the model-based controller wherein the spatial tuning includes:

obtaining (902) one or more models (304) associated with a model-based controller (104, 306) in an industrial process (100, 302) having multiple actuator arrays (114, 116,118, 120);
whereby the model-based controller (306) solves the optimal control problem defined as:

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) + \sum_{i=0}^{H_u-1} \left[ \Delta U(k+i)^T Q_2 \Delta U(k+i) + \left( U(k+i) - U_{sp}(k+i) \right)^T Q_3 \left( U(k+i) - U_{sp}(k+i) \right) + U(k+i)^T Q_4 U(k+i) \right] \right\}$$

which is subject to system dynamics and the following constraint:

$$\Omega \Delta U(k) \leq b - \Gamma U(k-1)$$

where

$$\Delta U(k) = U(k) - U(k-1)$$

and where the actuator profile U denotes the outputs of the controller (306) that are provided to the actuators,

$$\hat{Y} \in R^{\sum_{i=1}^{N_y} m_i}$$ represents the output prediction,

$$Y_{sp} \in R^{\sum_{i=1}^{N_y} m_i}$$ are set points for the controlled properties, and Hp is the prediction horizon,

$$Q_1 \in R^{\sum_{i=1}^{N_y} m_i \times \sum_{i=1}^{N_y} m_i}$$ is the diagonal penalty matrix for controlled variables,

$$Q_2 \in R^{\sum_{j=1}^{N_u} n_j \times \sum_{j=1}^{N_u} n_j}$$ is the diagonal penalty matrix for changes in manipulated variables and

$$Q_3 \in R^{\sum_{j=1}^{N_u} n_j \times \sum_{j=1}^{N_u} n_j}$$

is the penalty matrix for differences between the manipulated variables and their references $\Omega$, $\Gamma$ and b are constraint matrices or vectors determined based on physical limitations of the actual process (302), and

obtaining (904) a user-specific parametric uncertainty;
performing (906) a spatial tuning of the model-based controller, wherein the spatial tuning includes:

predicting (908) a worst-case cutoff frequency for each process input based on the one or more models and the user-specific parametric uncertainty;
designing (910) CD-MPC weighting matrices (*Sbj*) based on the one or more models and the worst-case cutoff frequency wherein the CD-MPC weighting matrices *Sbj* suppress one or more frequency components in each actuator profile of the multiple actuator arrays, wherein the CD-MPC weighting matrices include scalar weights, wherein one of the CD-MPC weighting matrices Q4 is associated with bending and/or picketing of the actuator arrays, and is calculated based on a bending moment matrix with dimension for each of the multiple actuator profiles

$$Q_4 = diag(q_{41} S_{b,1}^T S_{b,1}, q_{42} S_{b,2}^T S_{b,2}, \ldots, q_{4N_u} S_{b,N_u}^T S_{b,N_u}) \tag{24}$$

where:

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

where, $q_{4j}$ (where j = 1, ..., $N_u$) are scalar weights, where Sb,j is the bending moment matrix that incorporates a first and a second-order derivatives for each of the multiple actuator profiles to penalize a bending behavior in a cost function of the model-based controller wherein the CD-MPC weighting matrices *(Sbj)* are designed as high-pass spatial filters, where each filter has a passband equal to or based on one of the worst-case cutoff frequencies.

9. The apparatus of Claim 8, wherein the at least one processing device is further configured to perform temporal tuning of the model-based controller.

10. The apparatus of Claim 8, wherein each of the one or more models is represented in a two-dimensional frequency domain.

11. The apparatus of Claim 8, wherein, to perform the spatial tuning, the at least one processing device is configured to use the weighting matrices to shape a spatial spectrum of each of the actuator profiles.

12. The apparatus of Claim 8, wherein, to perform the spatial tuning, the at least one processing device is configured to adjust the weighting matrices based on the user-specific parametric uncertainty.

13. The apparatus of Claim 8, wherein, to perform the spatial tuning, the at least one processing device is further configured to:

for each process input, find the worst-case cutoff frequency overall output channels considering the one or more models, given the parametric uncertainty;
based on the one or more models and the worst-case cutoff frequencies, design the weighting matrices to penalize higher-frequency actuator variability; and
find a multiplier for a spatial frequency weighted actuator variability term in a cost function that guarantees robust spatial stability.

**14.** The apparatus of Claim 8, wherein the at least one processing device is further configured to provide one or more terms of a cost function to the model-based controller, the model-based controller configured to use the cost function during control of the industrial process such that a change to the one or more terms of the cost function alters operation of the model-based controller and the industrial process, at least one of the one or more terms based on the weighting matrices.

**15.** A non-transitory computer readable medium containing instructions that when executed cause at least one processing device to perform the method of any of Claims 1-7.

**Patentansprüche**

**1.** Verfahren zur robusten Abstimmung der Querrichtungs-Modellprädiktionssteuerung (CD-MPC) für mehrere Aktuatorfelder für Papierherstellungsprozesse mit Modellunsicherheiten, wobei das Verfahren umfasst:

Erhalten (902) eines oder mehrerer Modelle (304), die mit einer modellbasierten Steuerung (104, 306) in einem industriellen Prozess (100, 302) mit mehreren Aktuatorfeldern (114, 116, 118, 120) verbunden sind, wobei
die modellbasierte Steuerung (306) das optimale Steuerungsproblem löst, definiert als:

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) \right.$$

$$+ \sum_{i=0}^{H_u-1} \left[ \Delta U(k+i)^T Q_2 \Delta U(k+i) \right.$$

$$+ \left( U(k+i) - U_{sp}(k+i) \right)^T Q_3 \left( U(k+i) - U_{sp}(k+i) \right)$$

$$\left. \left. + U(k+i)^T Q_4 U(k+i) \right] \right\}$$

das der Systemdynamik und der folgenden Einschränkung unterliegt:

$$\Omega \Delta U(k) \leq b - \Gamma U(k-1)$$

wobei

$$\Delta U(k) = U(k) - U(k-1)$$

und
wobei das Aktuatorprofil U die Ausgänge der Steuerung (306) bezeichnet, die für die Aktuatoren bereitgestellt werden,

$\hat{Y} \epsilon R^{\sum_{i=1}^{N_y} m_i}$ die Ausgangsprognose darstellt,

$Y_{sp} \epsilon R^{\sum_{i=1}^{N_y} m_i}$ die Sollwerte für die gesteuerten Eigenschaften sind und Hp der Prognosehorizont ist,

$Q_1 \epsilon R^{\sum_{i=1}^{N_y} m_i \times \sum_{i=1}^{N_y} m_i}$ die diagonale Strafmatrix für gesteuerte Variablen ist,

$$Q_2 \epsilon R^{\sum_{j=1}^{N_u} n_j \times \sum_{j=1}^{N_u} n_j}$$ die diagonale Strafmatrix für Änderungen in manipulierten Variablen ist und

$$Q_3 \epsilon R^{\sum_{j=1}^{N_u} n_j \times \sum_{j=1}^{N_u} n_j}$$ die Strafmatrix für Unterschiede zwischen den manipulierten Variablen ist und ihre Referenzen $\Omega$, $\Gamma$ und b Einschränkungsmatrizen oder Vektoren sind, die basierend auf physischen Begrenzungen des tatsächlichen Prozesses (302) bestimmt werden,

und
Erhalten (904) einer benutzerspezifischen parametrischen Unsicherheit;
Durchführen (906) einer räumlichen Abstimmung der modellbasierten Steuerung, wobei die räumliche Abstimmung einschließt:

Prognostizieren (908) einer Worst-Case-Grenzfrequenz für jeden Prozesseingang basierend auf dem einen oder den mehreren Modellen und der benutzerspezifischen parametrischen Unsicherheit;
Entwerfen (910) von CD-MPC-Gewichtungsmatrizen (*Sbj*) basierend auf dem einen oder den mehreren Modellen und der Worst-Case-Grenzfrequenz, wobei die CD-MPC-Gewichtungsmatrizen *Sbj* eine oder mehrere Komponenten der Frequenz in jedem Aktuatorprofil der mehreren Aktuatorfelder unterdrücken, wobei die CD-MPC-Gewichtungsmatrizen skalare Gewichte einschließen, wobei eine der CD-MPC-Gewichtungsmatrizen Q4 mit Biegung und/oder Abstützung der Aktuatorfelder verbunden ist und basierend auf einer Biegemomentmatrix mit Dimension für jedes der mehreren Aktuatorprofile berechnet wird

$$Q_4 = diag\big(q_{41} S_{b,1}^T S_{b,1}, q_{42} S_{b,2}^T S_{b,2}, \ldots, q_{4N_u} S_{b,N_u}^T S_{b,N_u}\big) \tag{24}$$

wobei:

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

wobei $q_{4j}$ (wobei j = 1, ..., Nu) Skalargewichte sind, wobei Sb,j die Biegemomentmatrix ist, die eine erste und eine zweite Ableitung für jedes der mehreren Aktuatorprofile aufnimmt, um ein Biegeverhalten in einer Kostenfunktion der modellbasierten Steuerung zu bestrafen, wobei die CD-MPC-Gewichtungsmatrizen (*Sbj*) als räumliche Hochpassfilter entworfen sind, wobei jeder Filter einen Durchlassbereich aufweist, der gleich einer der Worst-Case-Grenzfrequenzen ist oder auf einer solchen basiert.

2. Verfahren nach Anspruch 1, ferner umfassend:
Durchführen (914) einer zeitlichen Abstimmung der modellbasierten Steuerung.

3. Verfahren nach Anspruch 1, wobei jedes des einen oder der mehreren Modelle in einem zweidimensionalen Frequenzbereich dargestellt wird.

4. Verfahren nach Anspruch 1, wobei die räumliche Abstimmung die Verwendung der Gewichtungsmatrizen umfasst, um ein räumliches Spektrum jedes der Aktuatorprofile zu formen.

5. Verfahren nach Anspruch 1, wobei die räumliche Abstimmung ferner das Einstellen der Gewichtungsmatrizen basierend auf der benutzerspezifischen parametrischen Unsicherheit umfasst.

6. Verfahren nach Anspruch 1, wobei die räumliche Abstimmung ferner umfasst:

für jeden Prozesseingang Finden (908) der Worst-Case-Grenzfrequenz der Gesamtausgangskanäle unter Berücksichtigung des einen oder der mehreren Modelle bei gegebener parametrischer Unsicherheit;

basierend auf dem einen oder den mehreren Modellen und den Worst-Case-Grenzfrequenzen Entwerfen (910) der Gewichtungsmatrizen, um die höherfrequente Aktuatorvariabilität zu bestrafen; und

Finden (912) eines Multiplikators für einen räumlichen frequenzgewichteten Aktuatorvariabilitätsbegriff in einer Kostenfunktion, die eine robuste räumliche Stabilität garantiert.

**7.** Verfahren nach Anspruch 1, wobei die räumliche Abstimmung ferner Folgendes umfasst:

Bereitstellen (922) eines oder mehrerer Begriffe der Kostenfunktion für die modellbasierte Steuerung, wobei die modellbasierte Steuerung dazu konfiguriert ist, die Kostenfunktion bei der Steuerung des industriellen Prozesses zu verwenden, so dass eine Änderung des einen oder der mehreren Begriffe der Kostenfunktion den Betrieb der modellbasierten Steuerung und des industriellen Prozesses verändert, wobei mindestens einer des einen oder der mehreren Begriffe auf den Gewichtungsmatrizen basiert.

**8.** Einrichtung, umfassend:

mindestens einen Speicher (204, 210, 212), der dazu konfiguriert ist, ein oder mehrere Modelle (304) zu speichern, die mit einer modellbasierten Steuerung (104, 306) in einem industriellen Prozess (100, 302) mit mehreren Aktuatorfeldern (114, 116, 118, 120) verbunden sind; und

mindestens eine Verarbeitungsvorrichtung (202), die dazu konfiguriert ist, eine benutzerspezifische parametrische Unsicherheit zu erhalten (904);

mindestens die eine Verarbeitungsvorrichtung (202), die dazu konfiguriert ist, eine räumliche Abstimmung der modellbasierten Steuerung durchzuführen, wobei die räumliche Abstimmung einschließt:

Erhalten (902) eines oder mehrerer Modelle (304), die mit einer modellbasierten Steuerung (104, 306) in einem industriellen Prozess (100, 302) mit mehreren Aktuatorfeldern (114, 116, 118, 120) verbunden sind; wobei

die modellbasierte Steuerung (306) das optimale Steuerungsproblem löst, definiert als:

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) \right.$$

$$+ \sum_{i=0}^{H_u-1} \left[ \Delta U(k+i)^T Q_2 \Delta U(k+i) \right.$$

$$+ \left( U(k+i) - U_{sp}(k+i) \right)^T Q_3 \left( U(k+i) - U_{sp}(k+i) \right)$$

$$\left. \left. + U(k+i)^T Q_4 U(k+i) \right] \right\}$$

das der Systemdynamik und der folgenden Einschränkung unterliegt:

$$\Omega \Delta U(k) \leq b - \Gamma U(k-1)$$

wobei

$$\Delta U(k) = U(k) - U(k-1)$$

und wobei das Aktuatorprofil U die Ausgänge der Steuerung (306) bezeichnet, die für die Aktuatoren bereitgestellt werden,

$\hat{Y} \epsilon R^{\Sigma_{i=1}^{N_y} m_i}$ die Ausgangsprognose darstellt,

$Y_{sp} \epsilon R^{\Sigma_{i=1}^{N_y} m_i}$ Sollwerte für die gesteuerten Eigenschaften sind und Hp der Prognosehorizont ist,

$Q_1 \epsilon R^{\Sigma_{i=1}^{Ny} m_i \times \Sigma_{i=1}^{Ny} m_i}$  die diagonale Strafmatrix für gesteuerte Variablen ist,

$Q_2 \epsilon R^{\Sigma_{j=1}^{Nu} n_j \times \Sigma_{j=1}^{Nu} n_j}$  die diagonale Strafmatrix für Änderungen in manipulierten Variablen ist und

$Q_3 \epsilon R^{\Sigma_{j=1}^{Nu} n_j \times \Sigma_{j=1}^{Nu} n_j}$  die Strafmatrix für Unterschiede zwischen den manipulierten Variablen ist und ihre Referenzen $\Omega$, $\Gamma$ und b Einschränkungsmatrizen oder Vektoren sind, die basierend auf physischen Begrenzungen des tatsächlichen Prozesses (302) bestimmt werden, und

Erhalten (904) einer benutzerspezifischen parametrischen Unsicherheit; Durchführen (906) einer räumlichen Abstimmung der modellbasierten Steuerung, wobei die räumliche Abstimmung einschließt:

Prognostizieren (908) einer Worst-Case-Grenzfrequenz für jeden Prozesseingang basierend auf dem einen oder den mehreren Modellen und der benutzerspezifischen parametrischen Unsicherheit;

Entwerfen (910) von CD-MPC-Gewichtungsmatrizen (*Sbj*) basierend auf dem einen oder den mehreren Modellen und der Worst-Case-Grenzfrequenz, wobei die CD-MPC-Gewichtungsmatrizen *Sbj* eine oder mehrere Komponenten der Frequenz in jedem Aktuatorprofil der mehreren Aktuatorfelder unterdrücken, wobei die CD-MPC-Gewichtungsmatrizen skalare Gewichte einschließen, wobei eine der CD-MPC-Gewichtungsmatrizen Q4 mit Biegung und/oder Abstützung der Aktuatorfelder verbunden ist und basierend auf einer Biegemomentmatrix mit Dimension für jedes der mehreren Aktuatorprofile berechnet wird

$$Q_4 = diag\left(q_{41}S_{b,1}^T S_{b,1}, q_{42}S_{b,2}^T S_{b,2}, ..., q_{4N_u}S_{b,N_u}^T S_{b,N_u}\right) \qquad (24)$$

wobei

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

wobei $q_{4j}$ (wobei j = 1, ..., Nu) Skalargewichte sind, wobei Sb,j die Biegemomentmatrix ist, die eine erste und eine zweite Ableitung für jedes der mehreren Aktuatorprofile aufnimmt, um ein Biegeverhalten in einer Kostenfunktion der modellbasierten Steuerung zu bestrafen, wobei die CD-MPC-Gewichtungsmatrizen (*Sbj*) als räumliche Hochpassfilter entworfen sind, wobei jeder Filter einen Durchlassbereich aufweist, der gleich einer der Worst-Case-Grenzfrequenzen ist oder auf einer solchen basiert.

9. Einrichtung nach Anspruch 8, wobei die mindestens eine Verarbeitungsvorrichtung ferner dazu konfiguriert ist, eine zeitliche Abstimmung der modellbasierten Steuerung durchzuführen.

10. Einrichtung nach Anspruch 8, wobei jedes des einen oder der mehreren Modelle in einem zweidimensionalen Frequenzbereich dargestellt wird.

11. Einrichtung nach Anspruch 8, wobei die mindestens eine Verarbeitungsvorrichtung zum Durchführen der räumlichen Abstimmung dazu konfiguriert ist, die Gewichtungsmatrizen zu verwenden, um ein räumliches Spektrum jedes der Aktuatorprofile zu formen.

12. Einrichtung nach Anspruch 8, wobei die mindestens eine Verarbeitungsvorrichtung zum Durchführen der räumlichen Abstimmung dazu konfiguriert ist, die Gewichtungsmatrizen basierend auf der benutzerspezifischen parametrischen Unsicherheit einzustellen.

13. Einrichtung nach Anspruch 8, wobei die mindestens eine Verarbeitungsvorrichtung zum Durchführen der räumlichen Abstimmung ferner dazu konfiguriert ist:

für jeden Prozesseingang die Worst-Case-Grenzfrequenz der Gesamtausgangskanäle unter Berücksichtigung des einen oder der mehreren Modelle bei gegebener parametrischer Unsicherheit zu finden;
basierend auf dem einen oder den mehreren Modellen und den Worst-Case-Grenzfrequenzen die Gewichtungsmatrizen zu entwerfen, um die höherfrequente Aktuatorvariabilität zu bestrafen; und
einen Multiplikator für einen räumlichen frequenzgewichteten Aktuatorvariabilitätsbegriff in einer Kostenfunktion zu finden, die eine robuste räumliche Stabilität garantiert.

14. Einrichtung nach Anspruch 8, wobei die mindestens eine Verarbeitungsvorrichtung ferner dazu konfiguriert ist, einen oder mehrere Begriffe einer Kostenfunktion für die modellbasierte Steuerung bereitzustellen, wobei die modellbasierte Steuerung dazu konfiguriert ist, die Kostenfunktion während der Steuerung des industriellen Prozesses zu verwenden, so dass eine Änderung des einen oder der mehreren Begriffe der Kostenfunktion den Betrieb der modellbasierten Steuerung und des industriellen Prozesses verändert, wobei mindestens einer des einen oder der mehreren Begriffe auf den Gewichtungsmatrizen basiert.

15. Nicht-transitorisches, computerlesbares Medium, das Anweisungen enthält, die, wenn sie ausgeführt werden, mindestens eine Verarbeitungsvorrichtung veranlassen, das Verfahren nach einem der Ansprüche 1 bis 7 durchzuführen.

**Revendications**

1. Procédé de réglage robuste de commande prédictive de modèle en sens travers (CD-MPC) à multiples réseaux d'actionneurs pour les processus de fabrication de papier avec des incertitudes de modèle, le procédé comprenant :

l'obtention (902) d'un ou plusieurs modèles (304) associés à un dispositif de commande basé sur un modèle (104, 306) dans un processus industriel (100, 302) ayant de multiples réseaux d'actionneurs (114, 116, 118, 120) ;
selon lequel
le dispositif de commande basé sur un modèle (306) résout le problème de commande optimale défini comme :

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) \right.$$

$$+ \sum_{i=0}^{H_u-1} \left[ \Delta U(k+i)^T Q_2 \Delta U(k+i) \right.$$

$$+ \left( U(k+i) - U_{sp}(k+i) \right)^T Q_3 \left( U(k+i) - U_{sp}(k+i) \right)$$

$$\left. \left. + U(k+i)^T Q_4 U(k+i) \right] \right\}$$

qui est soumis à la dynamique du système et à la contrainte suivante :

$$\Omega \Delta U(k) \leq b - \Gamma U(k-1)$$

où

$$\Delta U(k) = U(k) - U(k-1)$$

et
où le profil d'actionneur U désigne les sorties du dispositif de commande (306) qui sont fournies aux actionneurs,

$\hat{Y} \epsilon R^{\sum_{i=1}^{N_y} m_i}$ représente la prédiction de sortie,

$Y_{sp} \epsilon R^{\sum_{i=1}^{N_y} m_i}$ sont les points de consigne pour les propriétés contrôlées, et Hp est l'horizon de prédiction,

$Q_1 \epsilon R^{\sum_{i=1}^{N_y} m_i \times \sum_{i=1}^{N_y} m_i}$ est la matrice de pénalités diagonale pour les variables contrôlées,

$Q_2 \epsilon R^{\sum_{j=1}^{N_u} n_j \times \sum_{j=1}^{N_u} n_j}$ est la matrice de pénalités diagonale pour les changements dans les variables manipulées et

$Q_3 \epsilon R^{\sum_{j=1}^{N_u} n_j \times \sum_{j=1}^{N_u} n_j}$ est la matrice de pénalités pour les différences entre les variables manipulées et leurs références $\Omega$, $\Gamma$ et b sont des matrices ou vecteurs de contraintes déterminés sur la base de limitations physiques du processus réel (302), et

l'obtention (904) d'une incertitude paramétrique spécifique à l'utilisateur ; la réalisation (906) d'un réglage spatial du dispositif de commande basé sur un modèle, dans lequel le réglage spatial inclut :

la prédiction (908) d'une fréquence de coupure la plus défavorable pour chaque entrée de processus sur la base des un ou plusieurs modèles et de l'incertitude paramétrique spécifique à l'utilisateur ;

la conception (910) de matrices de pondération CD-MPC (*Sbj*) sur la base des un ou plusieurs modèles et de la fréquence de coupure la plus défavorable, dans lequel les matrices de pondération CD-MPC *Sbj* suppriment une ou plusieurs composantes de fréquence dans chaque profil d'actionneur des multiples réseaux d'actionneurs, dans lequel les matrices de pondération CD-MPC incluent des poids scalaires, dans lequel une des matrices de pondération CD-MPC Q4 est associée à la flexion et/ou au piquetage des réseaux d'actionneurs, et est calculée sur la base d'une matrice de moment de flexion avec une dimension pour chacun des multiples profils d'actionneur

$$Q_4 = diag\left(q_{41} S_{b,1}^T S_{b,1}, q_{42} S_{b,2}^T S_{b,2}, \dots, q_{4N_u} S_{b,N_u}^T S_{b,N_u}\right) \tag{24}$$

où :

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

où, $q_{4j}$ (où j = 1, ..., Nu) sont des poids scalaires, où Sb,j est la matrice de moment de flexion qui incorpore une dérivée du premier et du deuxième ordre pour chacun des multiples profils d'actionneur pour pénaliser un comportement de flexion dans une fonction de coût du dispositif de commande basé sur un modèle, dans lequel les matrices de pondération CD-MPC (*Sbj*) sont conçues comme des filtres spatiaux passe-haut, où chaque filtre a une bande passante égale à ou basée sur une des fréquences de coupure les plus défavorables.

2. Procédé selon la revendication 1, comprenant en outre :
la réalisation (914) d'un réglage temporel du dispositif de commande basé sur un modèle.

3. Procédé selon la revendication 1, dans lequel chacun des un ou plusieurs modèles est représenté dans un domaine fréquentiel bidimensionnel.

4. Procédé selon la revendication 1, dans lequel le réglage spatial comprend l'utilisation des matrices de pondération pour façonner un spectre spatial de chacun des profils d'actionneur.

5. Procédé selon la revendication 1, dans lequel le réglage spatial comprend en outre l'ajustement des matrices de pondération sur la base de l'incertitude paramétrique spécifique à l'utilisateur.

6. Procédé selon la revendication 1, dans lequel le réglage spatial comprend en outre :

pour chaque entrée de processus, le fait de trouver (908) les canaux de sortie globaux de fréquences de coupure les plus défavorables en considérant les un ou plusieurs modèles, compte tenu de l'incertitude paramétrique ;
sur la base des un ou plusieurs modèles et des fréquences de coupure les plus défavorables, la conception (910) des matrices de pondération pour pénaliser la variabilité de l'actionneur à plus haute fréquence ; et
le fait de trouver (912) un multiplicateur pour un terme de variabilité d'actionneur pondéré en fréquence spatiale dans une fonction de coût qui garantit une stabilité spatiale robuste.

7. Procédé selon la revendication 1, dans lequel le réglage spatial comprend en outre :
la fourniture (922) d'un ou plusieurs termes de la fonction de coût au dispositif de commande basé sur un modèle, le dispositif de commande basé sur un modèle étant configuré pour utiliser la fonction de coût pendant la commande du processus industriel de telle sorte qu'un changement des un ou plusieurs termes de la fonction de coût altère le fonctionnement du dispositif de commande basé sur un modèle et du processus industriel, au moins l'un des un ou plusieurs termes étant basé sur les matrices de pondération.

8. Appareil comprenant :

au moins une mémoire (204, 210, 212) configurée pour stocker un ou plusieurs modèles (304) associés à un dispositif de commande basé sur un modèle (104, 306) dans un processus industriel (100, 302) ayant de multiples réseaux d'actionneurs (114, 116, 118, 120) ; et
au moins un dispositif de traitement (202) configuré pour obtenir (904) une incertitude paramétrique spécifique à l'utilisateur ;
au moins le dispositif de traitement (202) étant configuré pour réaliser un réglage spatial du dispositif de commande basé sur un modèle, dans lequel le réglage spatial inclut :

l'obtention (902) d'un ou plusieurs modèles (304) associés à un dispositif de commande basé sur un modèle (104, 306) dans un processus industriel (100, 302) ayant de multiples réseaux d'actionneurs (114, 116, 118, 120) ;
selon lequel
le dispositif de commande basé sur un modèle (306) résout le problème de commande optimale défini comme :

$$\min_{\Delta U(k)} \left\{ \sum_{i=1}^{H_p} \left( \hat{Y}(k+i) - Y_{sp}(k+i) \right)^T Q_1 \left( \hat{Y}(k+i) - Y_{sp}(k+i) \right) \right.$$

$$+ \sum_{i=0}^{H_u-1} \left[ \Delta U(k+i)^T Q_2 \Delta U(k+i) \right.$$

$$+ \left( U(k+i) - U_{sp}(k+i) \right)^T Q_3 \left( U(k+i) - U_{sp}(k+i) \right)$$

$$+ U(k+i)^T Q_4 U(k+i) \Big] \Big\}$$

qui est soumis à la dynamique du système et à la contrainte suivante :

$$\Omega \Delta U(k) \leq b - \Gamma U(k-1)$$

où

$$\Delta U(k) = U(k) - U(k-1)$$

et où le profil d'actionneur U désigne les sorties du dispositif de commande (306) qui sont fournies aux

actionneurs,

$\hat{Y} \epsilon R^{\sum_{i=1}^{N_y} m_i}$ représente la prédiction de sortie,

$Y_{sp} \epsilon R^{\sum_{i=1}^{N_y} m_i}$ sont les points de consigne pour les propriétés contrôlées, et Hp est l'horizon de prédiction,

$Q_1 \epsilon R^{\sum_{i=1}^{N_y} m_i \times \sum_{i=1}^{N_y} m_i}$ est la matrice de pénalités diagonale pour les variables contrôlées,

$Q_2 \epsilon R^{\sum_{j=1}^{N_u} n_j \times \sum_{j=1}^{N_u} n_j}$ est la matrice de pénalités diagonale pour les changements dans les variables manipulées et

$Q_3 \epsilon R^{\sum_{j=1}^{N_u} n_j \times \sum_{j=1}^{N_u} n_j}$ est la matrice de pénalités pour les différences entre les variables manipulées et leurs références Ω, Γ et b sont des matrices ou vecteurs de contraintes déterminés sur la base de limitations physiques du processus réel (302),
et
l'obtention (904) d'une incertitude paramétrique spécifique à l'utilisateur ; la réalisation (906) d'un réglage spatial du dispositif de commande basé sur un modèle, dans lequel le réglage spatial inclut :

la prédiction (908) d'une fréquence de coupure la plus défavorable pour chaque entrée de processus sur la base des un ou plusieurs modèles et de l'incertitude paramétrique spécifique à l'utilisateur ;
la conception (910) de matrices de pondération CD-MPC (*Sbj*) sur la base des un ou plusieurs modèles et de la fréquence de coupure la plus défavorable, dans lequel les matrices de pondération CD-MPC *Sbj* suppriment une ou plusieurs composantes de fréquence dans chaque profil d'actionneur des multiples réseaux d'actionneurs, dans lequel les matrices de pondération CD-MPC incluent des poids scalaires, dans lequel une des matrices de pondération CD-MPC Q4 est associée à la flexion et/ou au piquetage des réseaux d'actionneurs, et est calculée sur la base d'une matrice de moment de flexion avec une dimension pour chacun des multiples profils d'actionneur

$$Q_4 = diag\left(q_{41} S_{b,1}^T S_{b,1}, q_{42} S_{b,2}^T S_{b,2}, \dots, q_{4N_u} S_{b,N_u}^T S_{b,N_u}\right) \qquad (24)$$

où :

$$S_{b,j} = \begin{bmatrix} -1 & 1 & 0 & \cdots & \cdots & \cdots & 0 \\ 1 & -2 & 1 & \ddots & \ddots & \ddots & \vdots \\ 0 & 1 & -2 & \ddots & \ddots & \ddots & \vdots \\ \vdots & \ddots & \ddots & \ddots & \ddots & \ddots & \vdots \\ \vdots & \ddots & \ddots & \ddots & -2 & 1 & 0 \\ \vdots & \ddots & \ddots & \ddots & 1 & -2 & 1 \\ 0 & \cdots & \cdots & \cdots & 0 & 1 & -1 \end{bmatrix}$$

où, $q_{4j}$ (où j = 1, ..., Nu) sont des poids scalaires, où Sb,j est la matrice de moment de flexion qui incorpore une dérivée du premier et du deuxième ordre pour chacun des multiples profils d'actionneur pour pénaliser un comportement de flexion dans une fonction de coût du dispositif de commande basé sur un modèle, dans lequel les matrices de pondération CD-MPC (*Sbj*) sont conçues comme des filtres spatiaux passe-haut, où chaque filtre a une bande passante égale à ou basée sur une des fréquences de coupure les plus défavorables.

9. Appareil selon la revendication 8, dans lequel l'au moins un dispositif de traitement est en outre configuré pour réaliser un réglage temporel du dispositif de commande basé sur un modèle.

EP 3 593 216 B1

**10.** Appareil selon la revendication 8, dans lequel chacun des un ou plusieurs modèles est représenté dans un domaine fréquentiel bidimensionnel.

**11.** Appareil selon la revendication 8, dans lequel, pour réaliser le réglage spatial, l'au moins un dispositif de traitement est configuré pour utiliser les matrices de pondération pour façonner un spectre spatial de chacun des profils d'actionneur.

**12.** Appareil selon la revendication 8, dans lequel, pour réaliser le réglage spatial, l'au moins un dispositif de traitement est configuré pour ajuster les matrices de pondération sur la base de l'incertitude paramétrique spécifique à l'utilisateur.

**13.** Appareil selon la revendication 8, dans lequel, pour réaliser le réglage spatial, l'au moins un dispositif de traitement est en outre configuré pour :

pour chaque entrée de processus, trouver les canaux de sortie globaux de fréquences de coupure les plus défavorables en considérant les un ou plusieurs modèles, compte tenu de l'incertitude paramétrique ; sur la base des un ou plusieurs modèles et des fréquences de coupure les plus défavorables, concevoir les matrices de pondération pour pénaliser la variabilité de l'actionneur à plus haute fréquence ; et trouver un multiplicateur pour un terme de variabilité d'actionneur pondéré en fréquence spatiale dans une fonction de coût qui garantit une stabilité spatiale robuste.

**14.** Appareil selon la revendication 8, dans lequel l'au moins un dispositif de traitement est en outre configuré pour fournir un ou plusieurs termes d'une fonction de coût au dispositif de commande basé sur un modèle, le dispositif de commande basé sur un modèle étant configuré pour utiliser la fonction de coût pendant la commande du processus industriel de telle sorte qu'un changement des un ou plusieurs termes de la fonction de coût altère le fonctionnement du dispositif de commande basé sur un modèle et du processus industriel, au moins l'un des un ou plusieurs termes étant basé sur les matrices de pondération.

**15.** Support non transitoire lisible par ordinateur contenant des instructions qui lorsqu'elles sont exécutées amènent au moins un dispositif de traitement à réaliser le procédé selon l'une quelconque des revendications 1 à 7.

37

**FIG. 1**

**FIG. 2**

FIG. 3

FIG. 4

## FIG. 5

## FIG. 6

# FIG. 7

# FIG. 8

900

START

902 — OBTAIN MODEL(S) ASSOCIATED WITH MODEL-BASED CONTROLLER OF INDUSTRIAL PROCESS

904 — OBTAIN USER-SPECIFIC PARAMETRIC UNCERTAINTY

908 — PREDICT WORST-CASE CUTOFF FREQUENCY FOR EACH PROCESS INPUT

910 — DESIGN WEIGHTING MATRICES

912 — FIND MULTIPLIER FOR SPATIAL FREQUENCY WEIGHTED ACTUATOR VARIABILITY TERM IN COST FUNCTION

906

916 — OBTAIN OVERSHOOT LIMITS FOR ACTUATOR PROFILE(S)

918 — IDENTIFY MINIMUM BOUND FOR PROFILE TRAJECTORY TUNING PARAMETERS

920 — IDENTIFY PROFILE TRAJECTORY TUNING PARAMETER(S) THAT MINIMIZE MEASUREMENT SETTLING TIMES WITHOUT EXCEEDING OVERSHOOT LIMITS

914

922 — PROVIDE TUNING PARAMETERS TO MODEL-BASED CONTROLLER AND USE CONTROLLER TO CONTROL/ ADJUST INDUSTRIAL PROCESS

END

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62467622
- US 62467803
- US 7650195 B2
- US 2018087221 A1, HE NING
- US 273702 A

### Non-patent literature cited in the description

- Two-dimensional frequency response analysis and insights for weight selection in cross-directionai model predictive control. **JUNQIANG FAN et al.** IEEE CONFERENCE ON DECISION AND CONTROL. (CDC). MAUI, HI, DEC. 9 - 12, 2003; [IEEE CONFERENCE ON DECISION AND CONTROL. IEEE, 09 December 2003, vol. 4, 3717-3723
- **NING HE et al.** Robust Tuning of Cross-Directional Model Predictive Controllers for Paper-Making Processes. *IEEE TRANSACTIONS ON CONTROL SYSTEMS TECHNOLOGY.*, 11 August 2017, vol. 26 (5), 1619-1634
- **NING HE et al.** Robust Tuning of Cross-Directional Model Predictive Controllers for Paper-Making Processes - IEEE Journals & Magazine. *IEEE Transactions on Control Systems Technology*, 11 August 2017
- **FAN et al.** Two-dimensional frequency analysis for unconstrained model predictive control of cross-direction processes. *Automatica*, November 2004, vol. 40 (11), 1891-1903
- **HE et al.** Automated two-degree-of-freedom model predictive control tuning. *Industrial & Engineering Chemistry Research*, October 2015, vol. 54 (43), 10811-10824